# EUROPEAN PATENT SPECIFICATION

(11) **EP 2 335 931 B1**
(45) Date of publication and mention of the grant of the patent: **27.08.2014**
(21) Application number: 10275121.1
(22) Date of filing: 01.12.2010
(51) Int. Cl.: B41J 2/47, G06K 15/12

(54) **Image Forming Apparatus and Image Forming Method**
Vorrichtung zur Bilderzeugung und Verfahren zur Bilderzeugung
Procédé et appareil de formation d'image

(30) Priority: 18.12.2009 JP 2009287206; 18.03.2010 JP 2010061920
(43) Date of publication of application: 22.06.2011
(73) Proprietor: Konica Minolta Business Technologies, Inc., Tokyo 100-500 (JP)
(72) Inventor: Iriyama, Norio, Tokyo Tokyo 100-500 (JP); Yoshizawa, Masanori, Tokyo Tokyo 100-500 (JP)
(74) Representative: Stanners, David Ralph

(56) References cited:
- JP-A- 2005 053 000
- US-A1- 2005 243 120
- US-A1- 2006 092 264

## Description

### BACKGROUND

### [Field of the Invention]

The present invention relates to an image forming apparatus and an image forming method.

### [Description of Related Art]

An image forming apparatus such as a printer and a copier has conventionally used a multi-beam system laser unit, in which a semiconductor laser array having a plurality of laser light sources emits laser lights and simultaneously scans a plurality of scanning lines to write an image for realizing speeding up and high resolution.

In a multi-beam system laser unit, it is desired to arrange the respective laser light sources without misalignment. However, because misalignment among the laser light sources sometimes occurs in actual manufacturing processes, though it is a little, the laser unit has the problem that writing start positions of an image become misaligned.

A write head from an imaging system using lasers is known from US 2005/0243120.

There is known an image forming apparatus which forms vertical line images, each of which is perpendicular to a main scanning direction, on the same sheet using light sources of plural lines with plural delay times which are forcibly delayed. The image forming apparatus then confirms a delay time when forming a vertical line image as the thinnest straight line, and adjusts an image writing timing in the main scanning direction by using the confirmed delay time as an operation value (Japanese Patent Application Laid-Open Publication No. 2005-53000).

However, the image forming apparatus described in Japanese Patent Application Laid-Open Publication No. 2005-53000 has the problem that adjustment of image writing timing in the main scanning direction is difficult because it is not easy to judge which is the vertical line image as the thinnest straight line by visually confirming fine misalignment among the vertical lines, with image resolution improved.

### SUMMARY

The present invention is achieved in view of the abovementioned problem and aims to provide an image forming apparatus and an image forming method, both enabling a user to easily adjust the image writing timing in a main scanning direction by a multi-beam system even with respect to a high resolution image.

According to a first aspect of the present invention, there is provided an image forming apparatus, including:
a laser light source section configured to include a plurality of laser light sources arranged in a sub scanning direction with predetermined intervals;
an irradiation section configured to irradiate a photosensitive body with laser lights emitted from the plurality of laser light sources by scanning in a main scanning direction and the sub scanning direction;
a timing setting section configured to set timing at which the irradiation section irradiates the photosensitive body with the laser lights emitted from the laser light sources; and
a control section configured to allow forming of on a sheet, by irradiating the photosensitive body with the laser lights based on the timing set in the timing setting section, a combined pattern image in which a plurality of combined images are arranged continuously in the sub scanning direction, in each of which combined images two first line images and a second line image are combined in such a way that the second line image is arranged between the two first line images which are arranged apart from each other in the main scanning direction, each of the first line images being formed by repeatedly performing scanning in the main scanning direction only with laser light emitted from a first laser light source among the laser light sources, and the second line image being formed by repeatedly performing scanning in the main scanning direction only with laser light emitted from a second laser light source among the laser light sources, which second laser light source produces a largest error in the main scanning direction on the photosensitive body between an irradiation position of the first laser light source and an irradiation position of the second laser light source.

According to another aspect of the present invention, there is provided a method for forming an image on a sheet by using a laser light source section which includes a plurality of laser light sources arranged in a sub scanning direction with predetermined intervals, an irradiation section which irradiates a photosensitive body with laser lights emitted from the plurality of laser light sources by scanning in a main scanning direction and the sub scanning direction, and a timing setting section which sets timing at which the irradiation section irradiates the photosensitive body with the laser lights emitted from the laser light sources, the method including the step of:
forming on a sheet, by irradiating the photosensitive body with the laser lights based on the timing set in the timing setting section, a combined pattern image in which a plurality of combined images are arranged continuously in the sub scanning direction, in each of which combined images two first line images and a second line image are combined in such a way that the second line image is arranged between the two first line images which are arranged apart from each other in the main scanning direction, each of the first line images being formed by repeatedly performing scanning in the main scanning direction only with laser light emitted from a first laser light source among the laser light sources, and the second line image being formed by repeatedly performing scanning in the main scanning direction only with laser light emitted from a second laser light source among the laser light sources, which second laser light source produces a largest error in the main scanning direction on the photosensitive body between an irradiation position of the first laser light source and an irradiation position of the second laser light source.

According to the first and second aspects of the present invention, the image forming apparatus and the image forming method enable a user to easily adjust the image writing timing in the main scanning direction by the multi-beam system even with respect to a high resolution image.

### BRIEF DESCRIPTION OF THE DRAWINGS

In the following, the above and other objects, advantages, and configurations of the present invention will more completely be understood on the basis of the following detailed description and accompanying drawings. The following description pertaining to implementation of the present invention is not intended to limit the present invention, in which:
FIG. 1 is a schematic configuration diagram of an image forming apparatus of the present invention;
FIG. 2 is a schematic configuration diagram of an image forming section of the image forming apparatus of FIG. 1;
FIG. 3 is a schematic configuration diagram of a light source section equipped in the image forming apparatus of FIG. 1;
FIG. 4 is a block diagram showing a control structure of the image forming apparatus of FIG. 1;
FIG. 5 is a diagram schematically showing a state in which writing start positions of laser lights respectively emitted from a first laser light source and an eighth laser light source are shifted so that a shift of the writing start position of laser light from the first laser light source becomes a quantity obtained by adding an adjustment value to a defined value;
FIG. 6A is a diagram schematically showing a state in which a quantity of the shift in a main scanning direction between writing start positions of laser lights respectively emitted from a first laser light source and an eighth laser light source is changed by minus one (-1) dot from a quantity shown in FIG. 5;
FIG. 6B is a diagram schematically showing a state in which the quantity of the shift in a main scanning direction betweem the writing start positions of the laser lights respectively emitted from the first laser light source and the eighth laser light source is changed by minus zero point five (-0.5) dot from the quantity shown in FIG. 5;
FIG. 6C is a diagram schematically showing a state in which the quantity of the shift in a main scanning direction between the writing start positions of the laser lights respectively emitted from the first laser light source and the eighth laser light source is changed by the same quantity as the quantity shown in FIG. 5;
FIG. 6D is a diagram schematically showing a state in which the quantity of the shift in a main scanning direction between the writing start positions of the laser lights respectively emitted from the first laser light source and the eighth laser light source is changed by plus zero point five (+0.5) dot from the quantity shown in FIG. 5;
FIG. 6E is a diagram schematically showing a state in which the quantity of the shift in a main scanning direction between the writing start positions of the laser lights respectively emitted from the first laser light source and the eighth laser light source is changed by plus one (+1.0) dot from the quantity shown in FIG. 5;
FIG. 7 is a schematic diagram of a combined pattern image of the present invention;
FIG. 8A is a view showing a state in which delays exist on the first laser light source side when the pattern image of FIG. 7 is output in the state where the shifts in the main scanning direction exist in the writing start positions;
FIG. 8B is a view showing the state in which delays exist on the eighth laser light source side when the pattern image of FIG. 7 is output in the state where the shifts in the main scanning direction exist in the writing start positions;
FIG. 9A is a schematic view of a first screen pattern image;
FIG. 9B is a schematic view of a second screen pattern image;
FIG. 10A is a schematic view when the first screen pattern image is output in a state where the shifts in the main scanning direction exist in the writing start positions;
FIG. 10B is a schematic view when the second screen pattern image of the present invention is output in a state where the shifts in the main scanning direction exist in the writing start positions;
FIG. 11A is a view for explaining a state in which moirés appear evenly in a first screen image and a second screen image, and no gap line is formed in a combined pattern image, when a pattern image is output on a sheet under a certain adjustment value;
FIG. 11B is a view for explaining a state in which an intense moire appears in a first screen image and a gap line is formed on a left side of a first line image, when a pattern image is output on a sheet under a certain adjustment value;
FIG. 11C is a view for explaining a state in which an intense moire appears in a second screen image and a gap line is formed on a left side of a second line image, when a pattern image is output on a sheet under a certain adjustment value;
FIG. 12 is a view schematically showing a state in which a pattern image of the present invention is output on a sheet;
FIG. 13 is schematic view of an adjustment screen of the present invention;
FIG. 14 is a flow chart for explaining output processing of a pattern image by the image forming apparatus of the present invention;
FIG. 15 is a schematic view showing a case in which a state of the pattern image of FIG. 12 output on a sheet is represented by a specified color pattern;
FIG. 16 is a flow chart for explaining changing processing by the image forming apparatus of the present invention;
FIG. 17A is a schematic view of a third screen pattern image;
FIG. 17B is a schematic view of a fourth screen pattern image;
FIG. 18A is a view showing images formed by a seventh, eighth, first, and second laser light sources in the cases where halftone dots are in a bilaterally symmetric shape and in bilaterally asymmetric shapes in the state where the shifts in the main scanning direction occur in the writing start positions of the first to eighth laser light sources and there is a delay on the first laser light source side;
FIG. 18B is a view showing images formed by the first to fourth laser light sources in the cases where halftone dots are a bilaterally symmetric shape and bilaterally asymmetric shapes in the state where the shifts in the main scanning direction occur in the writing start positions of the first to eighth laser light sources and there is a delay on the first light source side;
FIG. 18C is a view showing images formed by the first to fourth laser light sources in the cases where halftone dots are a bilaterally symmetric shape and bilaterally asymmetric shapes in the state where no shift in the main scanning direction occurs in the writing start positions of the first to eighth laser light sources;
FIG. 18D is a view showing images formed by the first to fourth laser light sources in the cases where halftone dots are a bilaterally symmetric shape and bilaterally asymmetric shapes in the state where the shifts in the main scanning direction occur in the writing start positions of the first to eighth laser light sources and there is a delay on the eighth laser light source side;
FIG. 18E is a view showing images formed by the seventh, eighth, first, and second laser light sources in the cases where halftone dots are a bilaterally symmetric shape and bilaterally asymmetric shapes in the state where the shifts in the main scanning direction occur in the writing start positions of the first to eighth laser light sources and there is a delay on the eighth laser light source side;
FIG. 19A is a schematic view showing a different third screen pattern image compared with the third screen pattern image shown in FIG. 17A; and
FIG. 19B is a schematic view showing a different fourth screen pattern image compared with the fourth screen pattern image shown in FIG. 17B.

### DETAILED DESCRIPTION OF THE PREFERRED EMBODIMENT

In the following, an embodiment 1 of the image forming apparatus of the present invention will be described with reference to the accompanying drawings.

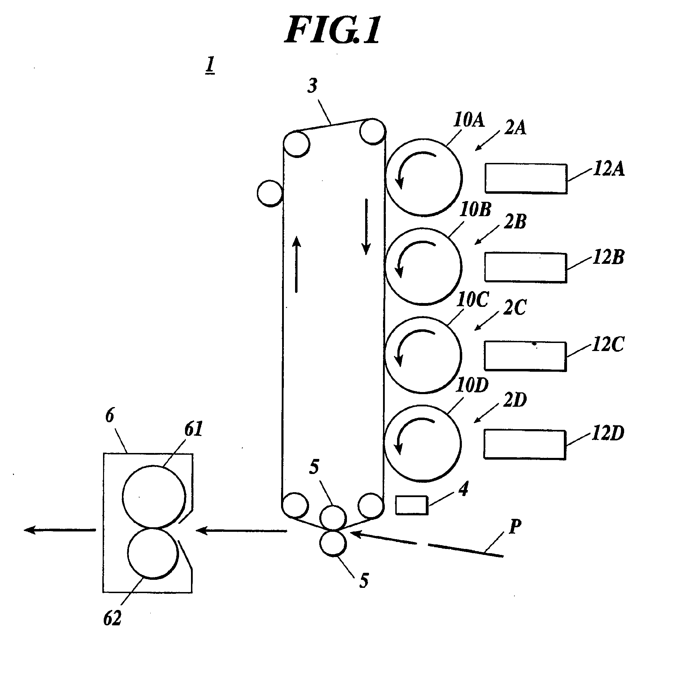

An image forming apparatus 1 of the present embodiment 1 is used as a color copier and a printer for example, and is composed of a plurality of image forming sections 2A-2D for respective colors, an intermediate transfer belt 3, a detection section 4, transfer rollers 5, a fixing section 6, and the like, as shown in FIG. 1. The letters A-D added to the ends of reference numbers in the present embodiment are marks added for explaining the configuration for each color in such a way that A denotes a cyan color (C), B denotes a magenta color (M), C denotes a yellow color (Y), and D denotes a black color (K). In the following, it is supposed that if no letters of A-D added to the reference numbers, the reference numbers indicate the same configuration among the respective colors, and that the configuration of any one of the colors is described on behalf of those of the respective colors.

The image forming sections 2A-2D is placed with predetermined intervals to the respective colors along the intermediate transfer belt 3 as shown in FIG. 1. The image forming sections 2A-2D transfer the developed toner images of the respective colors to the intermediate transfer belt 3 to form the images on a sheet P.

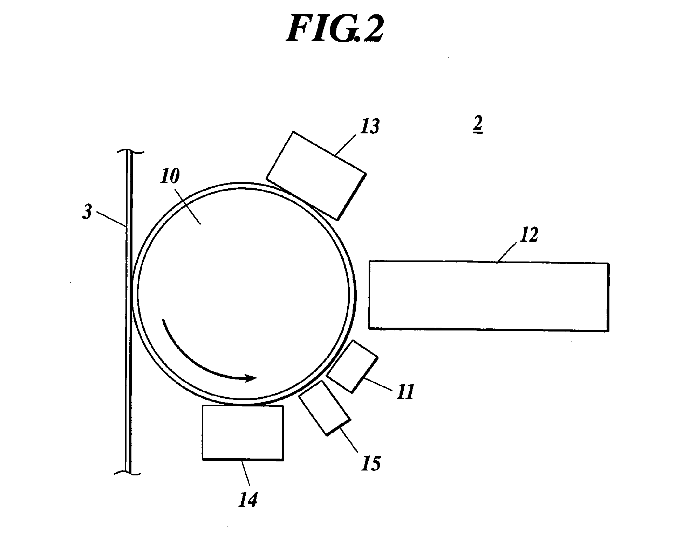

The image forming section 2 is composed of a photosensitive drum 10, a charging section 11, a laser unit 12, a developing section 13, a cleaner 14, and an electricity removing section 15 as shown in FIG 2.

The photosensitive drum 10 forms a toner image with a laser light radiated from a laser light source section 20 to transfer the formed toner image to the intermediate transfer belt 3. The photosensitive drum 10 is configured to be able to rotate into a direction (a sub scanning direction) shown by the arrows in FIGS. 1-3.

The charging section 11 uniformly charges the surface of the photosensitive drum 10.

The developing section 13 forms a toner image on the photosensitive drum 10 by making a toner adhere to a latent image formed by the laser unit 10.

The cleaner 14 removes the toner adhering to the peripheral surface of the photosensitive drum 10 by the developing section 13 and remains on the peripheral surface.

The electricity removing section 15 removes the electricity, charged by the charging section 11, on the surface of the photosensitive drum 10.

The intermediate transfer belt 3 is an endless belt as an image carrying section, and the toner images developed on the photosensitive drum 10A-10D of the respective image forming sections 2A-2D are transferred to the intermediate transfer belt 3.

The detection section 4 is composed of an optical sensor or the like. The detection section 4 is arranged at a position where the detection section 4 can detect a positional misalignment detecting test pattern formed on the intermediate transfer belt 3, and outputs a detection signal of the detected test pattern to an after-mentioned control section 30. The number of the detection sections 4 to be placed can be arbitrarily determined.

The transfer rollers 5 make the intermediate transfer belt 3 be inserted and pass between the rollers 5 together with the sheet P. The transfer rollers 5 are configured to depress the intermediate transfer belt 3 to the sheet P so that the toner images transferred from the photosensitive drum 10A-10D to the intermediate transfer belt 3 are transferred onto the sheet P.

The fixing section 6 is provided on a downstream side in the record sheet conveyance direction with respect to the transfer rollers 5. The fixing section 6 includes a heating roller 61, a pressure roller 62, and the like. The heating roller 61 and the pressure roller 62 respectively perform heating, and pressurizing by a nip pressure, to the sheet conveyed between the heating roller 61 and the pressure roller 62, and thereby fix the toner images on the sheet. Then, the sheet on which the toner images are fixed is conveyed by sheet ejecting rollers (not shown) arranged on a downstream side with respect to the fixing section 6, and are ejected to a tray (not shown).

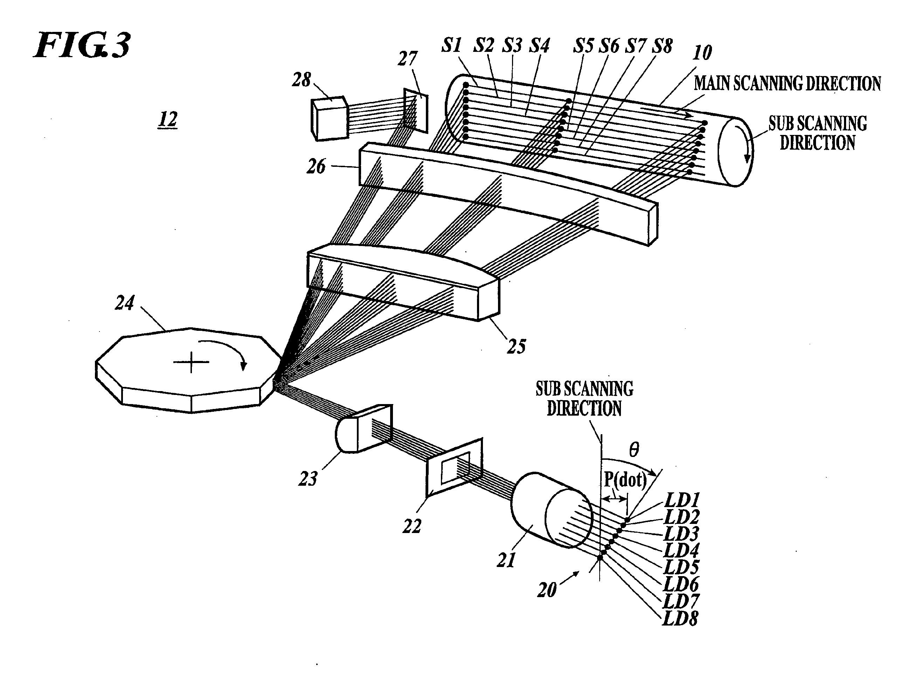

The laser unit 12 is a unit of a multi-beam system, performing writing by simultaneously scanning a plurality of scanning lines arranged on the photosensitive drum 10 in a main scanning direction by radiating a plurality of laser lights. As shown in FIG. 3, the laser unit 12 is composed of the laser light source section 20, a collimator lens 21, a slit 22, a cylindrical lens 23, a polygon mirror 24, an fθ lens 25, a cylindrical lens 26, a mirror 27, and a light receiving sensor 28.

The laser light source section 20 is a laser array provided with a first laser light source LD1 to an eighth laser light source LD8, each emitting a laser light. The first laser light source LD1 to the eighth laser light source LD8 are arranged on a straight line inclined from the sub scanning direction perpendicular to the main scanning direction by an angle θ with equal intervals in the sub scanning direction. The inclined arrangement produces a shift between emission positions of the laser lights from the first laser light source LD1 and the eighth laser light source LD8 by P (dots) in the main scanning direction as a defined value. The defined value P is a numeral value previously set for correcting the misalignment in the main scanning direction among the writing start positions of the laser light sources, which misalignment is produced in their manufacturing processes.

The collimator lens 21 converts the laser lights emitted from the laser light source section 20 into parallel lights.

The slit 22 restricts transmission of eight beams emitted from the collimator lens 21 so as to form a beam spot on the photosensitive drum 10.

The cylindrical lens 23 forms an image on the photosensitive drum 10 with the laser lights transmitting through the slit 22.

The polygon mirror 24 is a polygonal column having side surfaces being mirror surfaces. The polygon mirror 24 is configured to be rotatable in the arrow direction shown in FIG. 3 by a not-shown motor. Because the polygon mirror 24 reflects the laser lights transmitting through the cylindrical lens 23 in a direction according to a rotation position so as to deflect the lights, performing a scan exposure in the main scanning direction are enabled. A part of the laser lights reflected by the polygon mirror 24 is emitted toward the mirror 27.

The fθ lens 25 is a lens for correcting differences among distances from the polygon mirror 24 to the surface of the photosensitive drum 10, which differences are caused by differences of the reflection positions of the laser lights on the polygon mirror 24, so as to offset the influences to a main scanning speed.

The cylindrical lens 26 forms an image on the surface of the photosensitive drum 10 with the laser lights transmitting through the fθ lens 25. Then, the eight laser beams formed as the image on the photosensitive drum 10 perform scanning along the scanning lines S1-S8 shown in FIG. 3. Because the photosensitive drum 10 is configured to be rotatable in the direction of an arrow shown in FIG. 3, it is possible to make the laser lights radiated from the cylindrical lens 26 perform scanning in the sub scanning direction according to the rotation quantity.

The mirror 27 reflects the laser lights entering from the polygon mirror 24 toward the light receiving sensor 28.

The light receiving sensor 28 is a sensor for receiving the laser lights reflected by the mirror 27. The light receiving sensor 28 is configured to detect a light quantity from any one of the first laser light source LD1 to the eighth laser light source LD8 which one becomes a standard at the time of generating a synchronous clock.

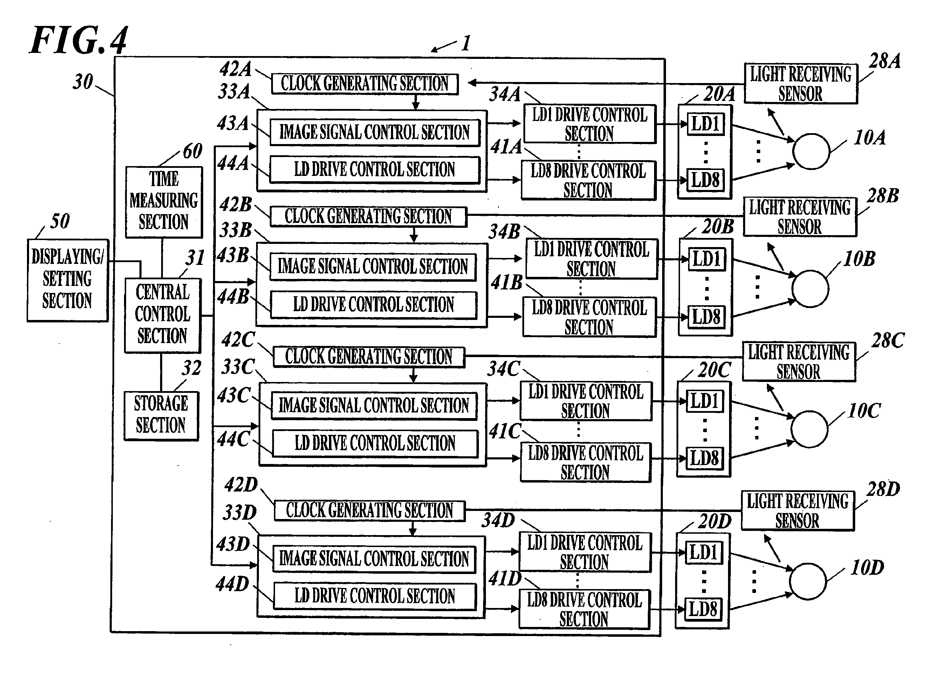

The control structure of the image forming apparatus 1 of the present embodiment will next be described with reference to the block diagram of FIG. 4.

The control structure of the image forming apparatus 1 includes the control section 30 and a displaying/setting section 50 as shown in FIG. 4.

The control section 30 is composed of a central control section 31 equipped with a central processing unit (CPU), a random access memory (RAM), and the like; a storage section 32 composed of a non-volatile memory or the like; each section control sections 33A-33D provided correspondingly to the laser units 12A-12D of the respective image forming sections 2A-2D; LD1 drive control sections 34A-34D, ..., and LD8 drive control sections 41A-41D for driving the first laser light source LD1 to the eighth laser light source LD8 of each of the laser units 12A-12D; clock generating sections 42A-42D; a time measuring section 60 to measure time, and the like.

The central control section 31 is configured of a central processing unit (CPU), a random access memory (RAM), and the like. The central control section 31 reads out various programs stored in the storage section 32 with the CPU to expand the read-out programs in the RAM, and executes the expanded various programs, so as to performs the integrated control of the whole operation of the image forming apparatus 1. To put it concretely, the central control section 31 transmits after-mentioned pattern images and adjustment values X of respective colors which are stored in the storage section 32 to the each section control sections 33A-33D, and performs controls to form the pattern images on the sheet P with the image forming sections 2A-2D on the basis of synchronous clocks generated by the clock generating sections 42A-42D. The central control section 31 is further configured to enable control of a rotation speed of the polygon mirrors 24 provided for the respective colors and/or control of adjustment of the image clocks, and can form an image including the above pattern images so as to be enlarged in the main scanning direction by a magnification ratio on the sheet P.

The each section control sections 33A-33D are respectively equipped with image signal control sections 43A-43D and LD drive control sections 44A-44D.

The image signal control sections 43A-43D form drive signals for performing on/off control of the first laser light source LD1 to the eighth laser light source LD8 based on the pattern image data transmitted from the central control section 31.

The LD drive control sections 44A-44D makes the clock generating sections 42A-42D generate synchronous clocks respectively, to control the writing start positions of laser lights in the main scanning direction. Furthermore, the LD drive control sections 44A-44D perform controls of writing starts by the laser lights from the first laser light source LD1 to the eighth laser light source LD8 of each of the laser units 12A-12D in order to align the writing start positions of the laser units 12A-12D with one another with respect to the sub scanning direction.

Then, the LD drive control sections 44A-44D determine the writing start positions of the eight laser lights on the basis of the clocks generated by the respective clock generating sections 42A-42D, and distribute the drive signals generated by the image signal control sections 43A-43D to the LD1 drive control sections 34A-34D, ..., the LD8 drive control sections 41A-41D, with the synchronous clocks synchronized.

The clock generating sections 42A-42D generate synchronous clocks on the basis of the laser light sources the lights from which are received by the light receiving sensors 28A-28D, which synchronous clocks are for changing timing of radiating the laser lights emitted by the first laser light source LD1 to the eighth laser light source LD8 arranged in the laser light source sections 20 to the photosensitive drum 10A-10D in accordance with instructions from the LD drive control sections 44A-44D.

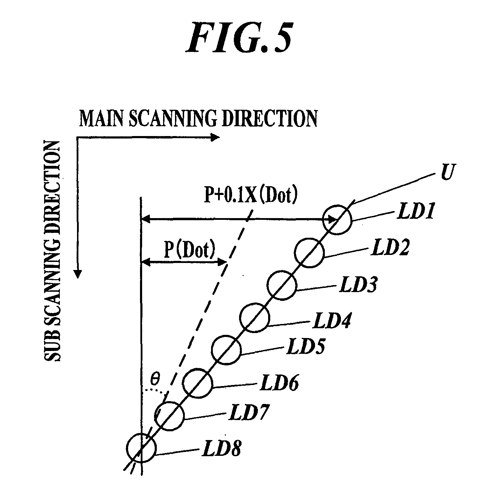

To put it concretely, the clock generating sections 42A-42D generate the synchronous clocks with respect to the first laser light source LD1 to the eighth laser light source LD8, in order that the writing start positions of the laser lights emitted from the first laser light source LD1 to the eighth laser light source LD8 may aligned with one another on a straight line U as shown in FIG. 5.

The straight line U is inclined by a predetermined angle from the sub scanning direction in order that the writing start positions of the laser lights emitted from the first laser light source LD1 and the eighth laser light source LD8 are shifted in the main scanning direction so that a shit of the position of LD1 in the main scanning direction may be P + 0.1X (dots), which is obtained by adding the adjustment value X (0.1 dots) to a defined value P (dots). The adjustment value X is a numeral value which is input and set by a user for each color with the after-mentioned displaying/setting section 50.

Thus, the laser light source section 20 performs scanning with a plurality of laser lights, in the state where the writing start position of light from the first laser light source LD1 is forcibly shifted in the main scanning direction by a value obtained by adding the adjustment value X set by a user to the defined value P, on the basis of the synchronous clocks generated by the clock generating sections 42A-42D. Consequently, the user can correct the misalignment in the main scanning direction among the writing start positions of the respective laser light sources by suitably selecting the adjustment value X, which misalignment is produced in the manufacturing process.

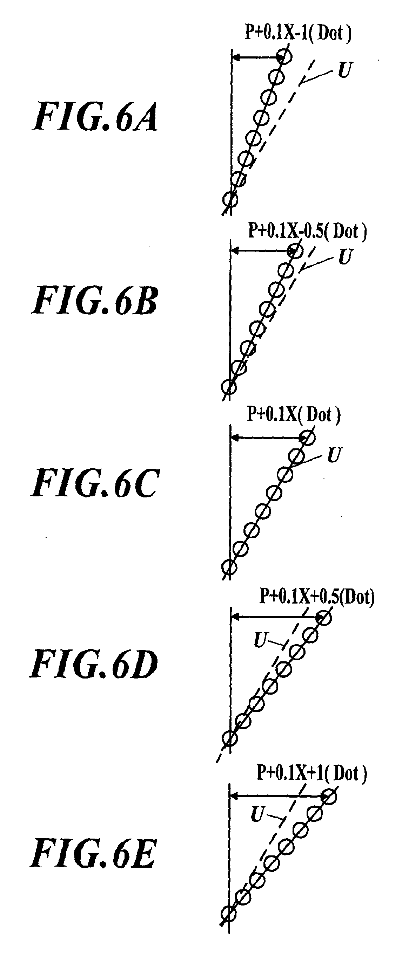

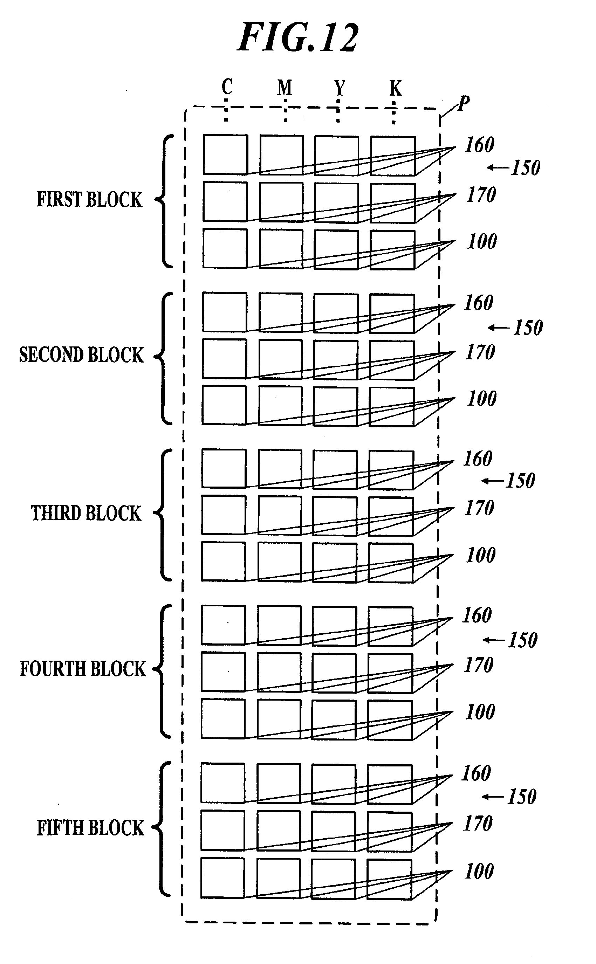

Furthermore, when the image forming sections 2A-2D form images of an after-mentioned combined pattern image 100 and a screen pattern image 150, as shown in FIGS. 6A-6E, the clock generating sections 42A-42D not only generate the synchronous clock (hereinafter referred to as a third clock) for producing the shift of the writing start position of P + 0.1X (dots), but also generate the synchronous clock for producing a shift of the writing start position of P + 0.1X - 1 (hereinafter referred to as a first clock), P + 0.1X - 0.5 (hereinafter referred to as a second clock), P + 0.1X + 0.5 (hereinafter referred to as a fourth clock), or P + 0.1X + 1 (hereinafter referred to as a fifth clock). Then, when the combined pattern image 100 and the screen pattern image 150 are output to the sheet P as shown in FIG. 12, the image forming sections 2A-2D sequentially output the pattern images based on the generated first clock to the fifth clock. The images of the first block to the fifth block in FIG. 12 are pattern images formed respectively on the basis of the first clock to the fifth clock.

The storage section 32 is a non-volatile memory for storing the various programs to be executed by the CPU of the central control section 31, and the combined pattern images 100 and the screen pattern images 150 as the pattern images. The storage section 32 further stores the adjustment values X of the respective colors set by the displaying/setting section 50.

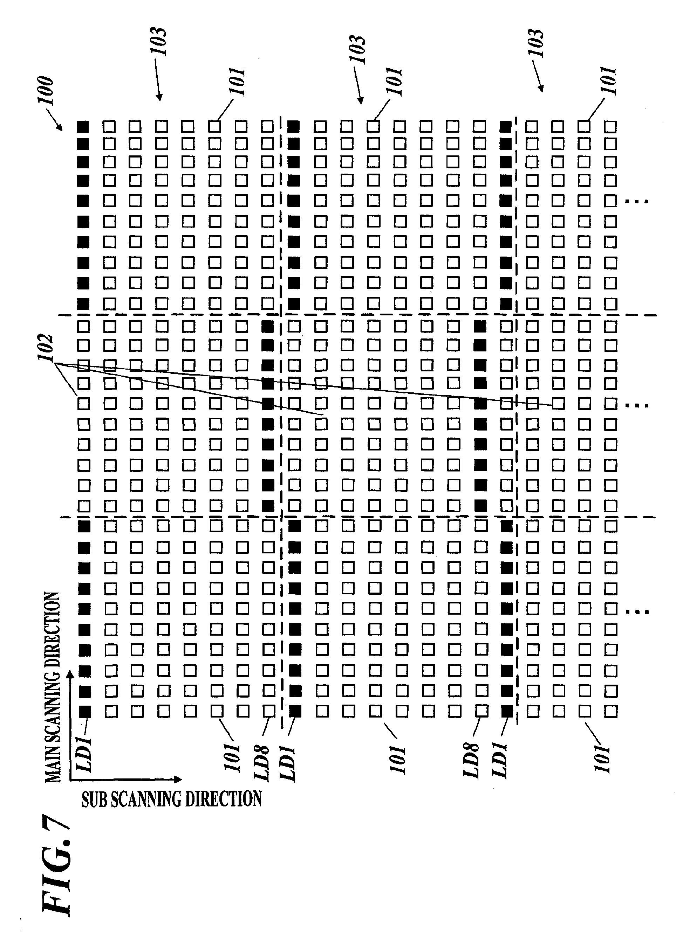

The combined pattern image 100 is an image including a plurality of combined images 103 serially arranged in the sub scanning direction, in each of which combined images 103 two first line images 101 are arranged apart from each other in the main scanning direction and second line images 102 are arranged between the first line images 101, as shown in FIG. 7.

Each of the first line images 101 is an image in which continuously formed laser spots are formed linearly along the main scanning line by repeating scanning in the main scanning direction, in the state where only the first laser light source LD1 emits the laser light among the plurality of laser light sources arranged in the laser light source section 20. On the other hand, each of the second line images 102 is an image in which continuously formed laser spots are formed linearly along the main scanning line by repeating scanning in the main scanning direction, in the state where only the eighth laser light source LD8 emits the laser light. The eighth laser light source LD8 is located at a position most distant from the first laser light source LD1 in the sub scanning direction among the laser light sources arranged in the laser light source section 20. Consequently, it is considered that an irradiation position error in the main scanning direction on the photosensitive drum 10 between the laser light emitted from the eighth laser light source LD8 and the laser light emitted from the first laser light source LD1 becomes largest (in other words, the misalignment in the main scanning direction between the write starting positions is most likely to appear remarkably).

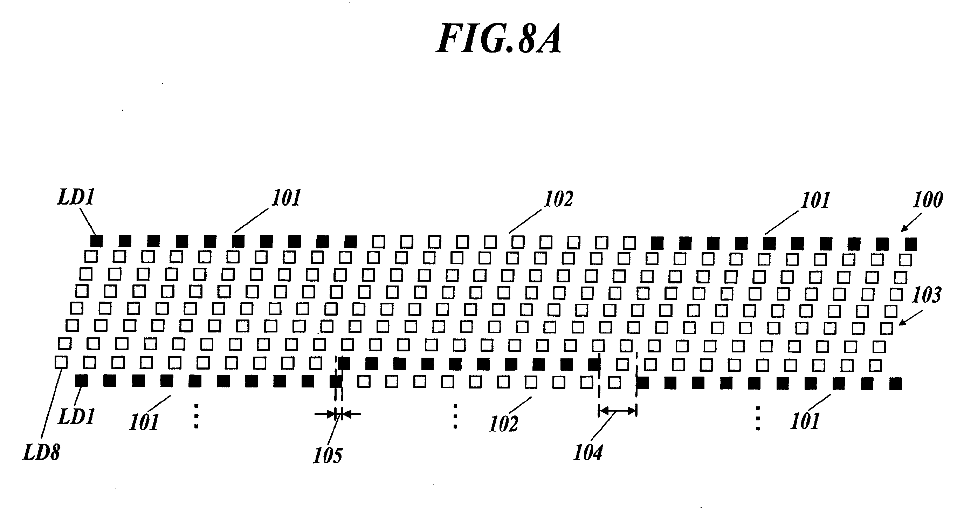

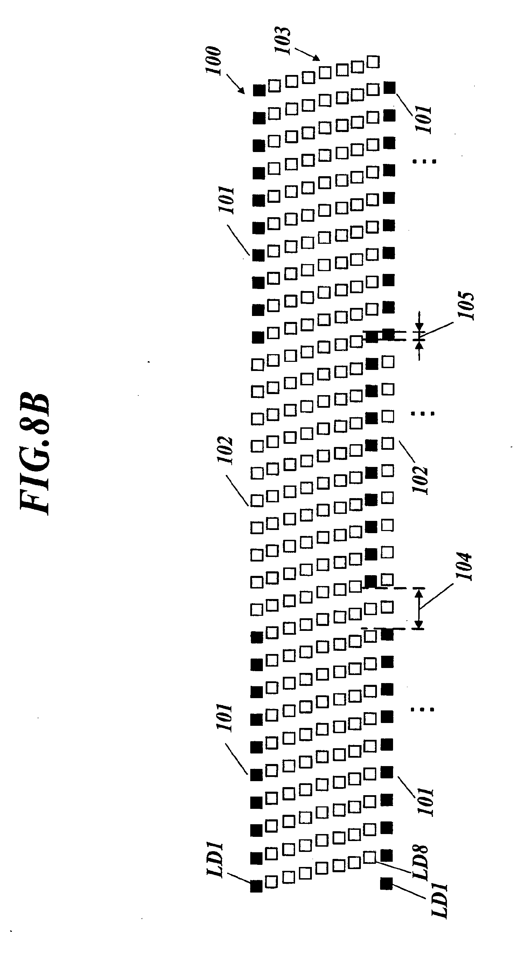

Consequently, for example, in the case where there is a delay of radiation timing of the laser light radiated from the first laser light source LD1 with respect to radiation timing of the laser light radiated from the eighth laser light source LD8 as shown in FIG. 8A, or in the case where there is a delay of radiation timing of the laser light radiated from the eighth laser light source LD8 with respect to radiation timing of the laser light radiated from the first laser light source LD1 as shown in FIG. 8B, gaps 104 (and overlapping 105) are formed in boundary divisions between the straight lines of the first line images 101 and the straight lines of the second line images 102 owing to the misalignment in the main scanning direction between the writing start positions of the first laser light source LD1 and the eighth laser light source LD8.

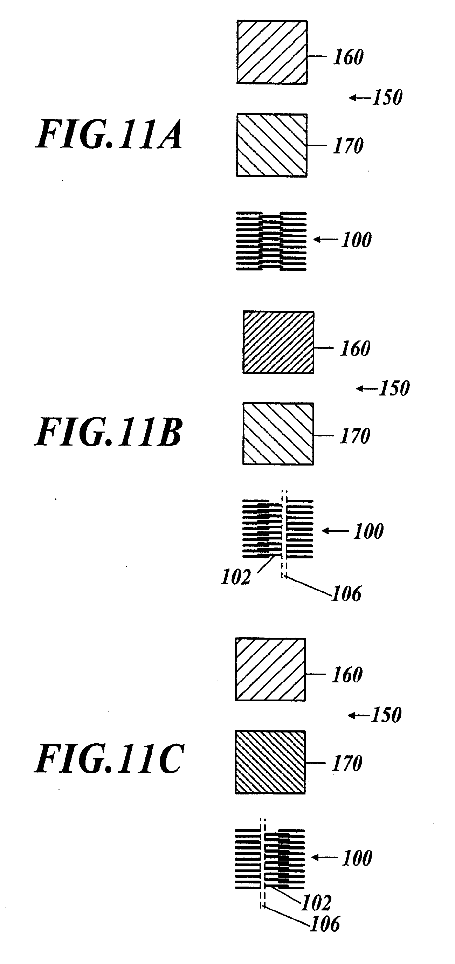

Thus, by outputting the combined images 103 repeatedly in the sub scanning direction on the sheet P, a user can observe gap lines 106 as shown in FIGS. 11B and 11C, each of which gap lines is composed of the gaps 104 formed continuously in the sub scanning direction. In other words, the user can correct the misalignment in the main scanning direction of the writing start positions by adjusting the adjustment value X so as to cancel the production of the gap line 106.

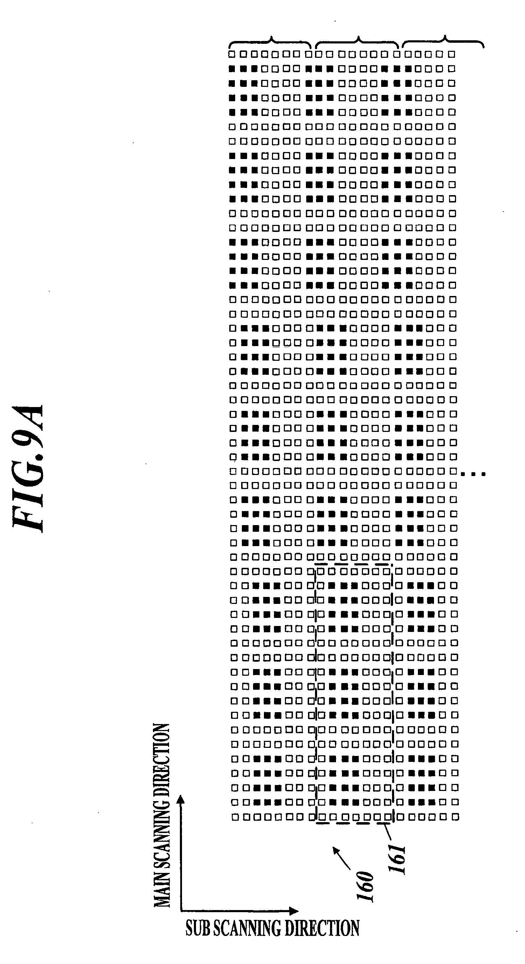

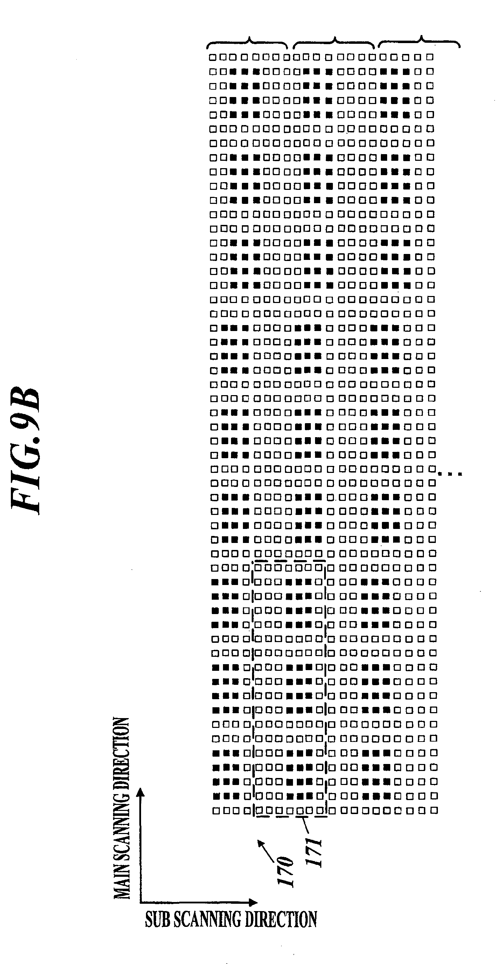

The screen pattern image 150 includes a first screen pattern image 160 shown in FIG. 9A and a second screen pattern image 170 shown in FIG. 9B. In FIGS. 9A and 9B, black rectangles indicate black pixels, and white rectangles indicate white pixels. The braces in FIG. 9 indicate the number (a period in which the laser light source section 20 performs scanning in the sub scanning direction at one time) of the laser light sources arranged in the laser light source section 20.

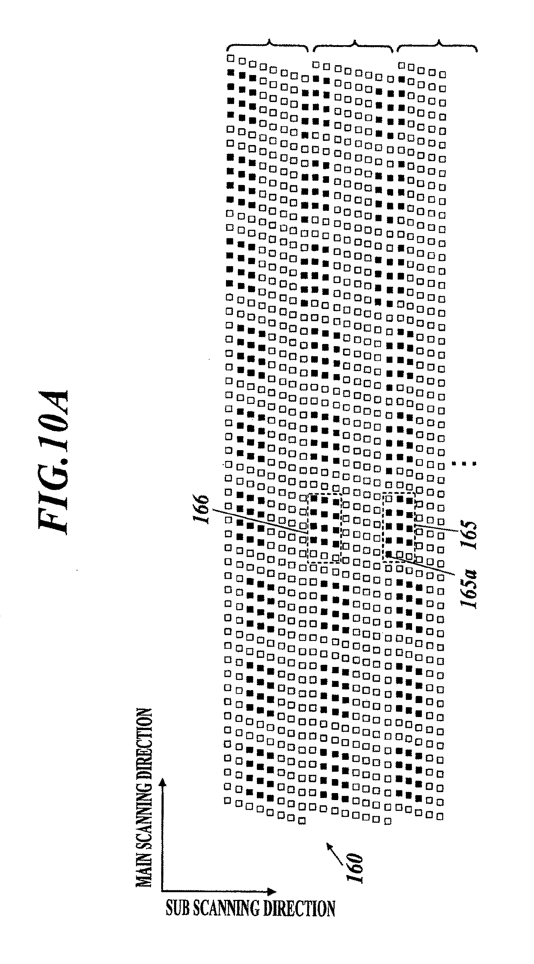

The first screen pattern image 160 is an image in which first screen patterns 161 are repeatedly arranged in the main scanning direction and in the sub scanning direction. Each of the first screen patterns 161 is an image in which a plurality of halftone dots are formed in certain regions, each of halftone dots is a dotting region of a substantially rectangular shape, which is composed of a plurality of black pixels. When the first screen pattern image 160 is output on the sheet P in the state where there is the shifts in the main scanning direction of the writing start positions of the laser light sources arranged in the laser light source section 20, as shown in FIG. 10A, the first screen pattern image 160 where positions corresponding to the dotting regions of the black pixels in the original first screen pattern image 160 are shifted in the main scanning direction is output. The number of pixels in the sub scanning direction of each of the first screen patterns 161 is set to seven as shown in FIG. 9A, which number is relatively prime to eight, which is the number of the laser light sources arranged in the laser light source section 20. Consequently, as shown in a region 165 of FIG. 10A, an isolated point 165 a projecting from the other adjacent black pixels is formed owing to the difference between the period in which the laser light source section 20 performs scanning in the sub scanning direction and the number of pixels in the sub scanning direction of each of the first screen patterns 161. The isolated point 165a is a position where image formation is difficult in an electronic photographic process. Consequently, an apparent difference of an area of the region 165 at the time of image formation is easily arises in comparison with those of another region 166 and the like, and moire easily arises in the region 165. By determining the number relatively prime to the number of the laser light sources as the number of pixels, the least common multiple of the number of pixels and the number of the laser light sources becomes larger in comparison with the case of determining the number having a common divisor with the number of the laser light sources as the number of the pixels. Consequently, the period in which the moire is produced in the first screen pattern image 160 becomes large, and thereby a user can easily observe the moire at the time of outputting the first screen pattern image 160 on the sheet P.

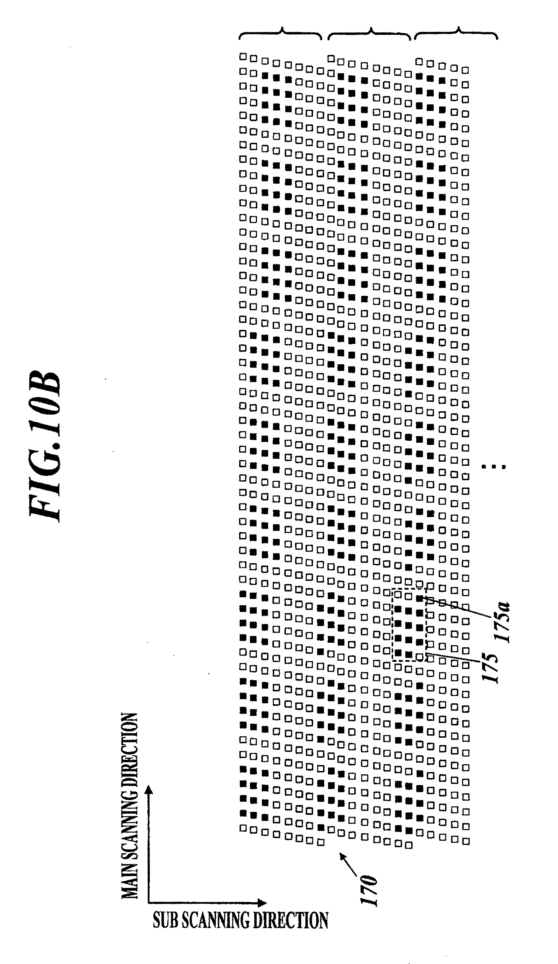

A second screen pattern image 170 is an image produced by repeatedly arranging the second screen patterns 171 in the main scanning direction and in the sub scanning direction, each of the second screen patterns 171 being obtained by inverting each of the first screen patterns 161 in the vertical direction. FIG. 10B shows the second screen pattern image 170 which is output on the sheet P in the state where there is the shifts in the main scanning direction of the writing start positions of the laser light sources arranged in the laser light source section 20, similarly to case of the first screen pattern image 160. In this case, when an isolated point 175a projecting from the other adjoining black pixels is formed, for example as shown in a region 175 of FIG. 10B, moire becomes easy to arise.

In other words, by outputting not only the first screen pattern image 160 but also the second screen pattern image 170 on the sheet P, the user can judge whether the delay of irradiating timing of the laser lights occurs on the first laser light source LD1 side or the eighth laser light source LD8 side.

The time measuring section 60 performs time measuring processing. The time measuring section 60 outputs measured time to the central control section 31 as a predetermined signal.

Then, the central control section 31 judges whether or not the time measured by the time measuring section 60 reaches the first timer value to start the image formation for each of the first to fifth blocks shown in FIG. 12, and whether or not the measured time reaches the second timer value to stop the image formation. In other words, the central control section 31 performs a control to convey the sheet P to an upper end position of each of the blocks with a conveyance mechanism (not shown) for the sheet P until the measured time reaches the first timer value, and forms a blank part between each of the blocks on the sheet P. The central control section 31 further performs a control to make the image forming sections 2A-2D execute the image formation of a pattern image in conformity with the synchronous clock (first to fifth clock) according to each block from the time point when the measured time reaches the first timer value to the time point when the measured time reaches the second timer value, and thereby the central control section 31 outputs the pattern image in each of the blocks.

The displaying/setting section 50 is composed of a liquid crystal display (LCD), a touch panel provided to cover the LCD, and the other operation key group. The displaying/setting section 50 displays predetermined screens on the LCD in conformity with display signals input from the central control section 31. The displaying/setting section 50 is configured to output a signal according to the content of the operation to the central control section 31 when a user operates the touch panel or the operation key group in accordance with the displayed screen.

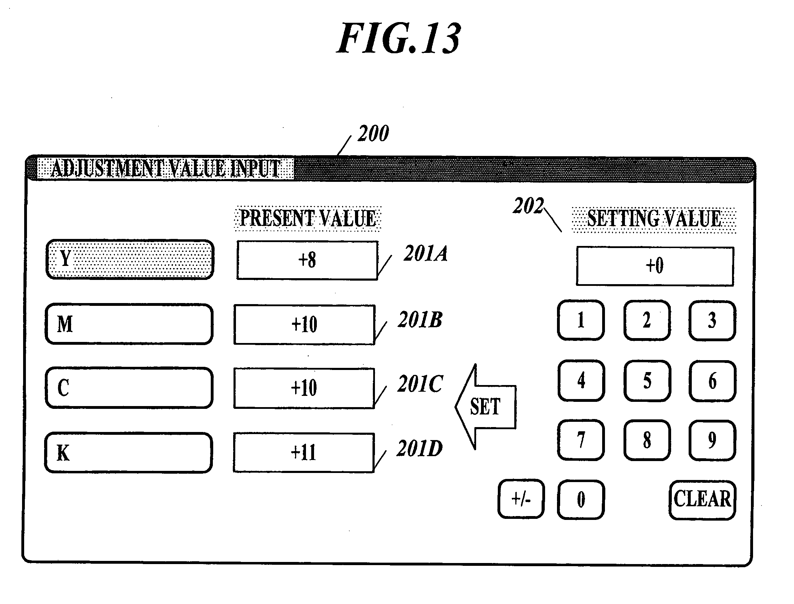

As screens displayed on the displaying/setting section 50, there is an adjustment screen 200 shown in FIG. 13 and the like. In the adjustment screen 200, the present values of the adjustment values X of the respective colors are displayed in present value display columns 201A-201D. With a setting value input column 202, a user can set each of the adjustment values X of the respective colors to a desired value. Furthermore, when the user sets the adjustment values X with the adjustment screen 200, the displaying/setting section 50 displays a screen (not shown) equipped with a start button for starting the output (printing) of the pattern image based on the set adjust values X.

In addition, the set adjustment values X are stored in the storage section 32 via the central control section 31.

The procedure of a user for correcting the misalignment in the main scanning direction of the writing start positions, in the case where the image forming section 2 outputs the pattern images on a sheet P on the basis of the synchronous clocks generated by the clock generating sections under the certain adjustment values X set by the user with the displaying/setting section 50, will be described with reference to FIGS. 11A-11C and 12.

It is supposed here that the pattern image output on the sheet P based on the third clock is any one of FIGS. 11A-11C. It is further supposed that the image shown in the third block of FIG. 12 corresponds to any one of the images shown in FIGS. 11A-11C. The images in the first block, the second block, the fourth block, and the fifth block in FIG. 12 are pattern images to be output to the sheet P on the basis of the first clock, the second clock, the fourth clock, and the fifth clock, respectively, which are generated together with the third clock. In FIG. 12, respective row of C, M, Y, and D each separated with each other indicate that the images of the first block to the fifth block are formed as the image of the respective colors of cyan color (C), magenta color (M), yellow color (Y), and the black color (K). Moreover, it is supposed that with respect to the first screen pattern images 160 and the second screen pattern images 170 in FIG. 11, dense oblique lines in the rectangles express that moire strongly appears and thin oblique liens express that moire weakly appears, for descriptive purposes.

Firstly, as shown in FIG. 11A, when moires appear evenly in both of the first screen pattern image 160 and the second screen pattern image 170 and the gap line 106 is not formed in the combined pattern image 100, it can be considered that the misalignment of the writing start positions have been corrected by the adjustment value X at the time of outputting of FIG. 11A.

Secondly, as shown in FIG. 11B, when intense moiré is observed in the first screen pattern image 160 and the gap line 106 is observed on the right side of the second line images 102, it is estimated that a delay of the writing start positions exists on the side of the first laser light source LD1. In this case, the adjustment value X is changed to a smaller value. Then, when the images shown in FIG. 11A can be observed when outputting the pattern image based on the changed adjustment value X on the sheet P, it is considered that the misalignment of the writing start positions has been corrected.

The change quantity of the adjustment value X can be set by observing the combined pattern image 100 and the screen pattern images 150 (the images in the fourth block and the fifth block shown in FIG. 12) output on the basis of the fourth clock and the fifth clock here. The reason is that, because the fourth clock and the fifth clock are synchronous clocks for emphasizing the delay of the writing start positions on the side of the first laser light source LD1 more than that of the third clock as shown in FIGS. 6D and 6E, the user can more remarkably sight the tendency observed in FIG. 11B in the images of the fourth block and the fifth block.

Thirdly, as shown in FIG. 11C, when intense moire is observed in the second screen pattern image 170 and the gap line 106 is observed on the left side of the second line images 102, it is estimated that a delay of the writing start position exist on the side of the eighth laser light source LD8. In this case, the adjustment value X is changed to a larger value. Then, when the images shown in FIG. 11A can be observed when outputting the pattern image based on the changed adjustment value X on the sheet P, it is considered that the misalignment of the writing start positions has been corrected.

The change quantity of the adjustment value X can be set by observing the combined pattern image 100 and the screen pattern images 150 (the images in the first block and the second block shown in FIG. 12) output on the basis of the first clock and the second clock. The reason is that, because the first clock and the second clock are synchronous clocks for emphasizing the delay of the writing start positions on the side of the eighth laser light source LD8 more than that of the third clock as shown in FIGS. 6A and 6B, the user can more remarkably observe the tendency observed in FIG. 11C in the images of the first block and the second block.

In addition, the aforesaid adjustment is performed by the judgment of the horizontal position of the gap line 106, or by the selection of the screen pattern image in which moire is strongly observed. Consequently, it is also possible to configure the image forming apparatus 1 to output only one of the combined pattern image 100 and the screen pattern image 150 on the sheet P and to allow a user to perform adjustment by observing the output pattern image. In this regard however, when the image forming apparatus 1 is configured to be able to output both the pattern images as shown in FIGS. 11A-11C, the user can perform the adjustment by suitably selecting the pattern image that is easy to observe.

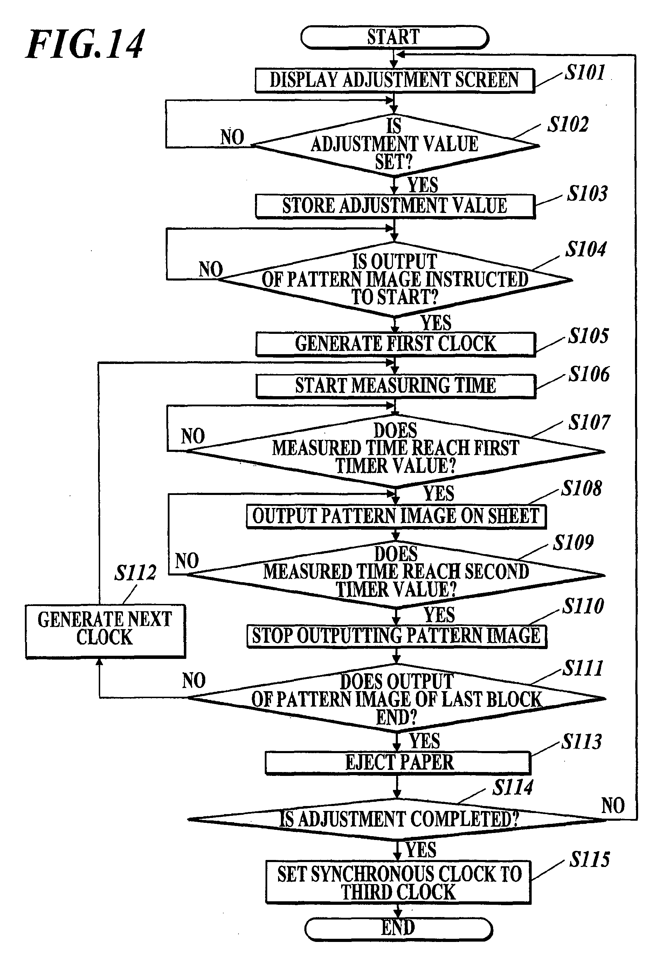

Next, the output processing of the pattern image by the image forming apparatus 1 of the present embodiment will be described by using the flow chart of FIG. 14.

First, when a user operates the touch panel or the operation key group of the displaying/setting section 50 to perform a calling operation of the adjustment screen 200, the central control section 31 displays the adjustment screen 200 on the LCD of the displaying/setting section 50 (Step S101).

Next, the central control section 31 judges whether or not the user sets the adjustment value X (Step S 102). Then, when the central control section judges that the user does not the adjustment value X, the central control section 31 waits for the input of the adjustment value X (Step S102: No). On the other hand, when the central control section 31 judges that the adjustment value X is set (Step S102: Yes), the central controls section 32 stores the set adjustment value X in the storage section 32 (Step S103).

Next, central control section 31 judges whether or not the user performs an output starting instruction of a pattern image with the displaying/setting section 50 (Step S 104). Then, when the central control section 31 judges that the user does not perform the output starting instruction (Step S104: No), the central control section 31 waits until the user performs the output starting instruction.

On the other hand, when the central control section 31 judges that the user performs the output starting instruction (Step S104: Yes), the central control section 31 transmits the combined pattern image 100, the screen pattern image 150, and the adjustment value X that are stored in the storage section 32 to the each section control sections 33A-33D, and makes the clock generating sections 42A-42D generate the first clock for outputting the images in the first block (Step S105).

Next, the central control section 31 starts to measure time with the time measuring section 60 to convey the sheet P (Step S106). Then, the central control section 31 judges whether or not the measured time reaches the first timer value (Step S 107). When the central control section 31 judges that the measured time does not reach the first time value (Step S107: No), the central control section 31 continuously performs the conveyance of the sheet P. On the other hand, when the central control section 31 judges that the measured time reaches the first timer value (Step S107: Yes), the central control section 31 performs the output of the pattern images on the sheet P on the basis of the clocks presently generated synchronous in the clock generating sections 42A-42D (Step S108). At that time, the central control section 31 performs the adjustment control of the rotation speed of the polygon mirror 24 or the image clock, the aforesaid pattern images can be output in the state of being enlarged in the main scanning direction by the predetermined magnification ratio.

Next, the central control section 31 judges whether or not the measured time reaches the second timer value (Step S 109). When the central control section 31 judges that the measured time does not reach the first time value (Step S109: No), the central control section 31 repeats the processing on and after Step S108. On the other hand, when the central control section 31 judges that the measured time reaches the second timer value (Step S109: Yes), the central control section 31 stops the outputting of the pattern image (Step S 110).

Next, the central control section 31 judges whether or not the outputting of the pattern image has ended to the last block (fifth block) (Step S111). Then, when the central control section 31 judges that the outputting of the pattern images has not ended to the last block (Step S111: No), the control section 31 makes the clock generating sections 42A-42D generate a synchronous clock for outputting the next block images (Step S112), and repeats the processing on and after Step S106.

On the other hand, when the central control section 31 judges that the outputting of the pattern images has ended to the last block (Step S111: Yes), the central control section 31 makes the sheet P be ejected (Step S113).

Next, the central control section 31 allows the user observing the ejected sheet P at Step S 112 to select, with the displaying/setting section 50, whether or not the adjustment of the shifts of the writing start positions has been completed (Step S114). Then, when the user selects that the adjustment has not been completed (Step S114: No), the central control section 31 repeats the processing on and after the Step S101.

On the other hand, when the user selects that the adjustment is not completed (Step S 114: Yes), the central control section 31 sets the synchronous clock to the third clock (Step S 115), and performs the control of executing the image formation based on the third clock on and after the present processing.

As described above, according to the image forming apparatus 1 of the present embodiment, a user can easily grasp whether or not the misalignment in the main scanning direction of the writing start positions of the laser light sources arranged in the laser light source section 20 exists by ascertaining whether or not the gap line 106 is formed in the combined pattern image 100 output to the sheet P. That is, because the use only has to ascertain the existence of the gap line 106, the user can easily observe the misalignment of the writing start positions even to high resolution images. When the user ascertains the existence of the gap line 106, the user can again set the adjustment values X with the displaying/setting section 50 lest the gap line 106 is not formed in the combined pattern image 100. Thereby the user can easily adjust the writing timing of the image only by that setting and the adjustment. Consequently, the aforesaid way of adjustment is far easier than the way of visually specifying a vertical line image formed as a thinnest straight line from a plurality of vertical line images perpendicular to the main scanning direction.

Furthermore, according to the image forming apparatus 1, a user observes in which of the first screen pattern image 160 and the second screen pattern image 170 that are output to the sheet P moire strongly appears, and thereby the user can grasp whether or not the misalignment in the main scanning direction of the writing start positions of the laser light sources arranged in the laser light source section 20 exist. Moreover, because the number of pixels in the sub scanning direction of the first screen patterns 161 and the second screen patterns 171 respectively constituting the first screen pattern image 160 and the second screen pattern image 170 is set to be in a relation of prime with the number eight of the laser light sources, the period in which moiré arises is extended, and the user can easily observe the moiré even to high resolution images. Furthermore, when the user observes in which of the first screen pattern image 160 and the second screen pattern image 170 the moiré more strongly appears, the user can again set the adjustment values X with the displaying/setting section 50 so as to be able to observe the moirés appearing evenly in both of the first screen pattern image 160 and the second screen pattern image 170. Only by those operations, the user can easily adjust the writing timing of images.

Although the image forming apparatus 1 can perform adjustment by outputting only one of the combined pattern image 100 or the screen pattern image 150 as the pattern image onto the sheet P, because the image forming apparatus 1 is configured to be able to output both of the pattern images, a user can suitably select the pattern image that is easy to observe, and consequently the adjustment becomes easier.

Moreover, according to the image forming apparatus 1, the central control section 31 performs the adjustment control of the control of the rotation speed of the polygon mirror 24 or the image clock performs the adjustment control, and thereby the images including the pattern images can be output on the sheet P in the state of extending the image in the main scanning direction by the predetermined magnification ratio. Consequently, a user can perform the observation of the gap line 106 and moiré in the pattern image more easily.

Furthermore, according to the image forming apparatus 1, because the images of the respective colors of a cyan color (C), a magenta color (M), a yellow color (Y), and a black color (K) can be formed on a sheet P as shown in FIG. 12 at the time of forming the pattern images, the trouble of forming the pattern images of the respective colors on different sheets is reduced. In addition, because the adjustment of the writing timing of the aforesaid images can simultaneously be performed to all of the colors, the adjustment can rapidly be performed.

Next, a modification of the image forming apparatus 1 of the embodiment 1 will be described. The points different from those of the embodiment 1 will mainly be described here.

In the aforesaid embodiment 1, although the central control section 31 is configured in order to form the images colored by the respective cyan color (C), magenta color (M), yellow color (Y), and black color (K) on the sheet P at the time of forming the pattern image, the present modification 1 is configured to be able to change a respective color pattern constituting the images of the respective aforesaid colors, and a specified color pattern produced by specifying one or a plurality of colors of the aforesaid colors according to the use of the image forming apparatus 1 to form pattern images on the sheet P by the specified colors.

To put it concretely, for example, when a user thinks that the main use of the image forming apparatus 1 is the image formation of an electronic photograph, as long as an image is a pattern image formed of a cyan color (C), a magenta color (M), and a black color (K), the sighting of moiré can be performed according to the property of the electronic photograph, but the sighting of moiré is difficult in a yellow color (Y) image (moiré is inconspicuous). Consequently, in such a case, it is sufficient to form a pattern image on a sheet P only with colors in which moiré can be sighted.

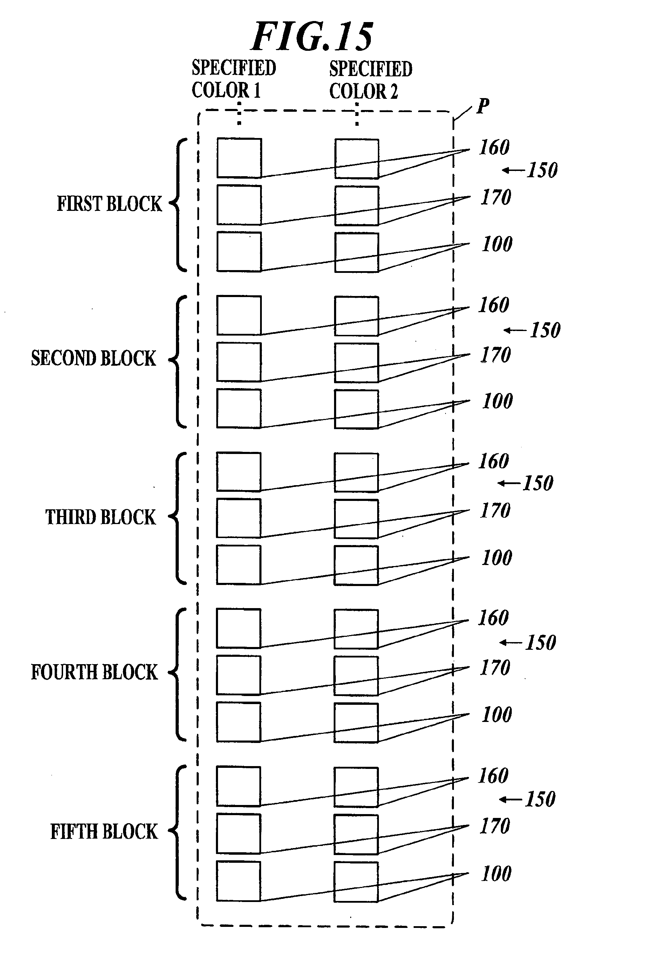

Accordingly, the uses of the image forming apparatus 1 (for example, various conditions for specifying the uses including a sheet type and a weight of sheet P, a kind of an image to be formed) and one or a plurality of colors for forming the pattern images on a sheet P according to the use among the aforesaid colors are previously stored in the storage section 32 by relating the uses to the colors. Then, the central control section 31 extracts (specifies) the one or the plurality of colors from the storage section 32, and forms pattern images on a sheet P with the specified colors. Thereby, the specified color pattern as shown in FIG. 15 is realized. In FIG. 15, the "specified color 1" and the "specified color 2" show the aforesaid specified colors.

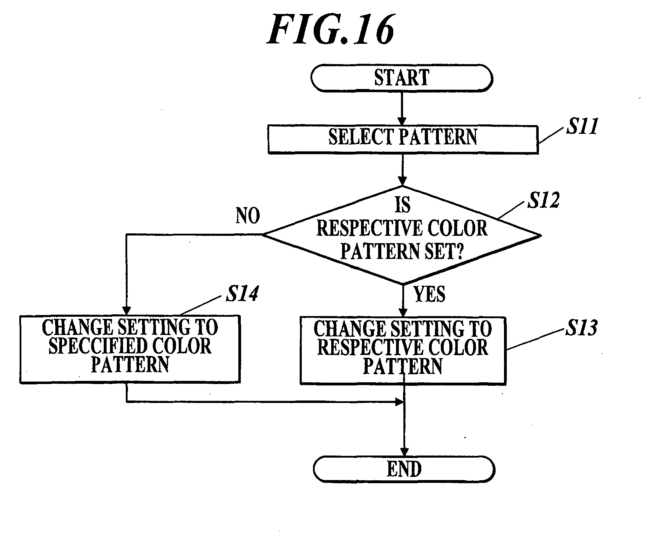

Next, the changing processing of changing the respective color pattern and the specified color pattern will be described by using the flow chart of FIG. 16.

First, a user operates the touch panel or the operation key group of the displaying/setting section 50 to select either of the respective color pattern and the specified color pattern (Step S11).

Next, the central control section 31 judges whether or not the pattern selected at Step S1 1 is the respective color pattern (Step S12).

Then, when the central control section 31 judges that the respective color pattern is selected at Step S12 (Step S12: Yes), the central control section 31 sets a predetermined flag value to one (1) to perform change setting to the respective color pattern (Step S 13), and ends the present processing. On the other hand, when the central control section 31 judges that the specified color pattern is selected (Step S12: No), the central control section 31 sets the aforesaid flag value to zero (0) to perform change setting to the specified color pattern (Step S 14), and ends the present processing.

Next, the central control section 31 executes the output processing of the pattern image shown in FIG. 14 on the basis of the aforesaid set flag value. On this occasion, the central control section 31 refers to the flag value set at Step S 13 or S 14 when the central control section 31 performs the outputting of the pattern images on the sheet P at Step S108. Then, when the flag value is one (1), the central control section 31 realizes the respective color pattern as shown in FIG. 12. On the other hand, when the flag value is zero (0), the central control section 31 realizes the specified color pattern by forming the pattern images composed of only the colors specified from the storage section 32 as shown in FIG. 15.

As described above, according to the present modification, one or a plurality of colors is specified from the respective colors according to the use of the image forming apparatus 1, and the pattern image can be formed on a sheet P with the specified color. Consequently the adjustment of the image writing timing can pertinently be performed only to the color in which moiré is conspicuous. Furthermore, because the central control section 31 can change the respective color pattern and the specified color pattern on the basis of the selection of a user, the user can select suitable pattern according to the easiness of the adjustment for the user itself.

Next, an embodiment 2 of the image forming apparatus of the present invention will be described. The points different from those of the aforesaid embodiment 1 will mainly be described here.

In the image forming apparatus 1a, the storage section 32 stores a screen pattern image 250 in place of the screen pattern image 150, and the central control section 31 forms the screen pattern image 250 on the sheet P.

The configurations of the image forming apparatus 1a similar to those of the image forming apparatus 1 of the embodiment 1 will be denoted by the marks same as those of the image forming apparatus in the following description, and their descriptions will be omitted.

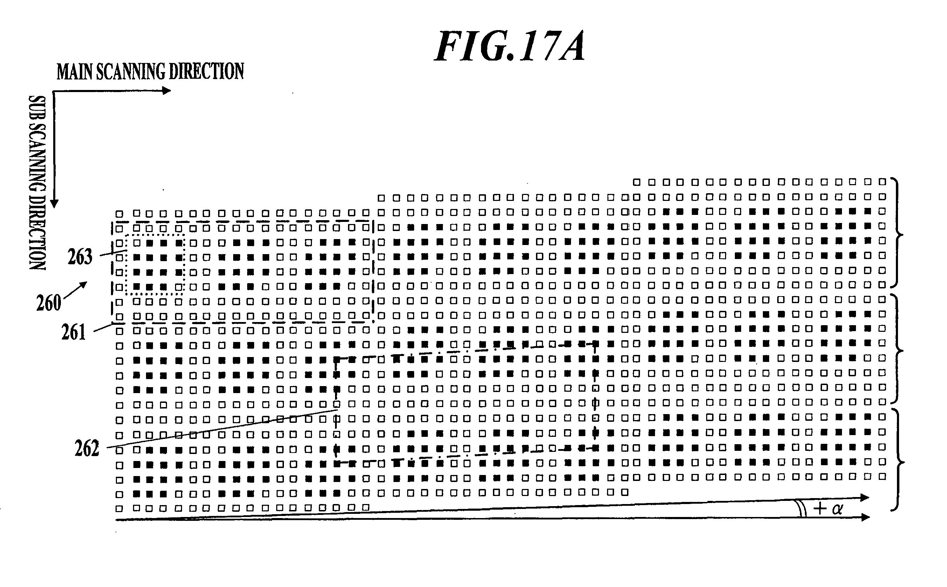

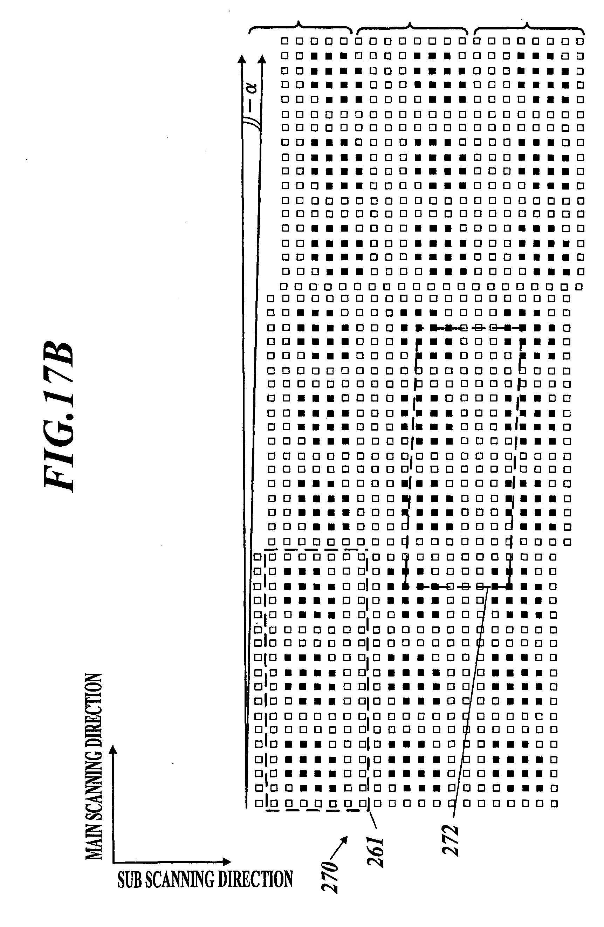

The screen pattern image 250 includes a third screen pattern image 260 shown in FIG. 17A and a fourth screen pattern image 270 shown in FIG. 17B. The black color rectangle denotes black pixel and the white color rectangle denote a white pixel in FIG. 17 here. Furthermore, the braces shown in FIGS. 17A and 17B indicate the number of the laser light sources arranged in the laser light source section 20 (the period in which the laser light source section 20 performs scanning in the sub scanning direction at one time).

The third screen pattern image 260 is, as shown in FIG. 17A, an image in which first screen patterns 261 each including a plurality of dotting parts (halftone dots 263), each of which parts includes a plurality of black pixels forming a substantially rectangle shape as certain regions thereof, are repeatedly arranged in the main scanning direction and the sub scanning direction in order that screen angle may be +α (> 0). In addition, the number of pixels in the sub scanning direction of the first screen pattern 261 is seven, which is in the relation of prime with the number eight of the laser light sources arranged in the laser light source section 20 similarly to the first screen patterns 161, and the number of the pixels is set in order that moiré may easily arise and the observation of the moiré may be easy.

The screen angle is an angle formed by a screen line and a parallel line in the main scanning direction. Consequently, because the first screen patterns 261 adjoining each other in the main scanning direction are led to be arranged in the state where they shift from each other by several pixels (one pixel in FIG. 17A) in the sub scanning direction owing to the screen angle of +α, a halftone pattern 262 has a nonorthogonal form (parallelogram-shaped).

On the other hand, the fourth screen pattern image 270 is, as shown in FIG. 17B, an image in which the first screen patterns 261 are repeatedly arranged in the main scanning direction and the sub scanning direction in order that a screen angle (-α) antisymmetric to the screen angle (+α) of the third screen pattern 260 may be formed. Consequently, because the first screen patterns 261 adjoining each other in the main scanning direction are led to be arranged in the state where they shift from each other by several pixels in the sub scanning direction (into the reverse direction to that of the first screen patterns 261 shown in FIG. 17A) owing to the screen angle of -α, a halftone pattern 272 has an antisymmetric nonorthogonal form (parallelogram-shaped) to the halftone pattern 262.

Then, when the central control section 31 forms a screen pattern image 250, which is formed in such a way that the aforesaid halftone patterns 262 and 272 have nonorthogonal forms, on a sheet P, streaky moiré in the direction inclined from the main scanning direction by a screen angle as shown by the oblique lines in the rectangle of FIG. 11 is excited on the sheet P. Consequently, when correcting the misalignment of the writing start positions based on the sheet P shown in FIG. 12, a user can sight the difference between the streaky moiré in the inclined direction in the screen pattern image 250 caused by the misalignment of the writing start positions, and streaky moiré other than the aforesaid moiré, which is parallel to the main scanning direction or the sub scanning direction and caused by the configuration of each section (for example, rollers) of the image forming apparatus 1.

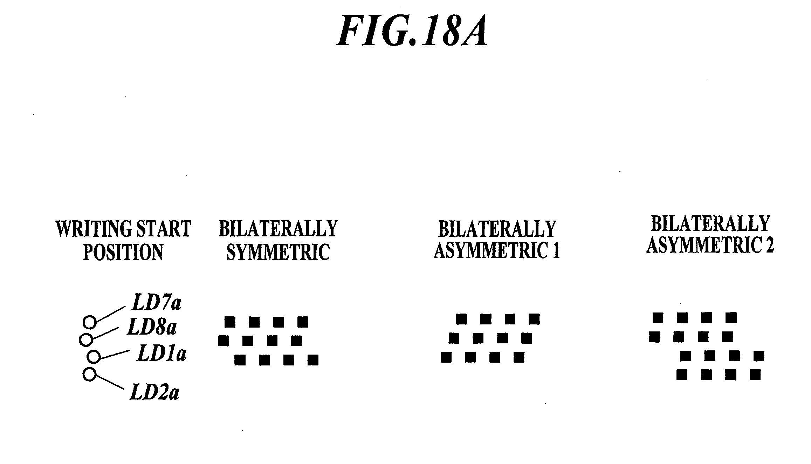

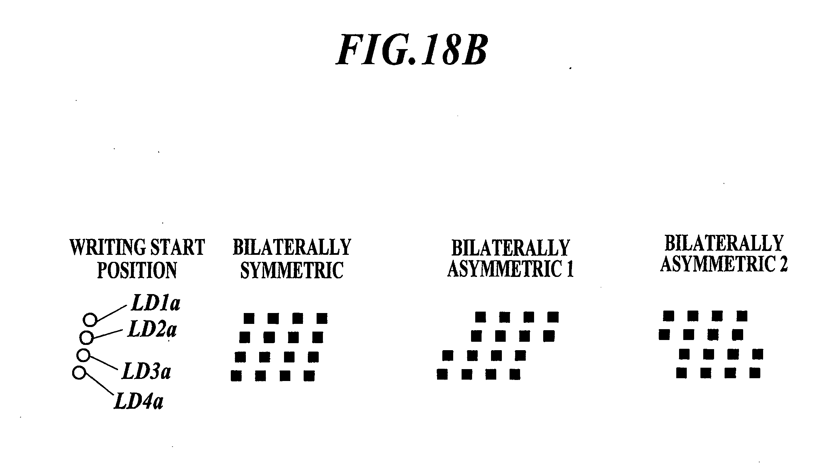

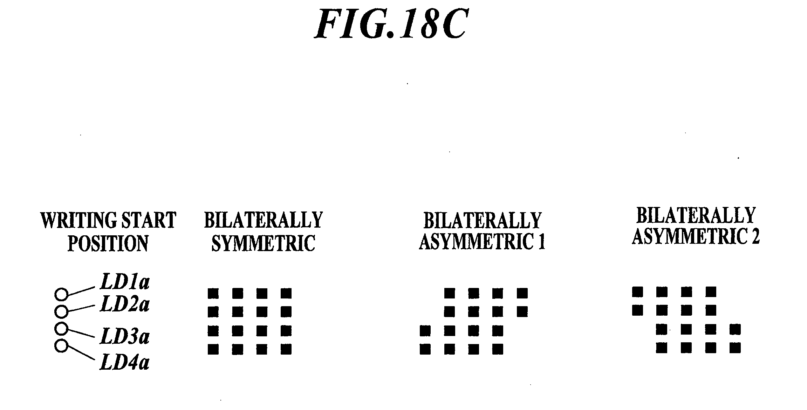

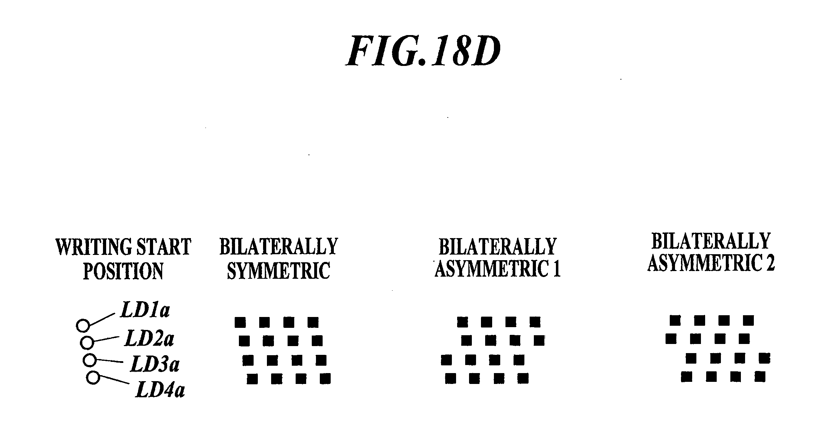

Now, it is desirable that the halftone dots 263 included in the first screen pattern 261 (and the halftone dots included in the first screen patterns 161 according to the embodiment 1) form a bilaterally symmetric shape in order that the misalignment of the writing start positions may be easy to sight when the central control section 31 performs image formation. FIGS. 18A-18E show the images formed in the case where halftone dots are bilaterally symmetric and in the cases where halftone dots are bilaterally asymmetric in a state where misalignments in the main scanning direction arise in the writing start positions LD1a-LD8a of the first laser light source LD1 to the eighth laser light source LD8, respectively.

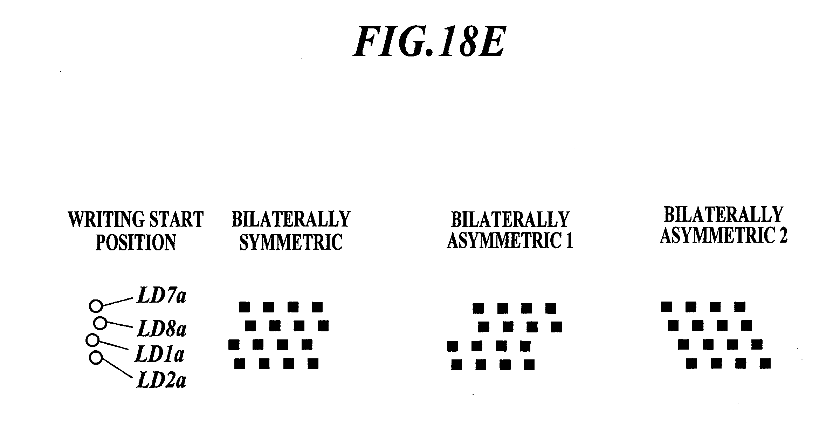

First, when the halftone dots are "bilaterally asymmetric shape 1", which is not a bilaterally symmetric shape, as shown in FIG. 18A, despite the existence of a delay on the first laser light source side (the LD1a is situated at a position to shift to the right side), the halftone dots formed on the sheet P has caused the state in which the delay of the first laser light source side cannot be ascertained. When the halftone dots are "bilaterally asymmetric shape 2," which is not a bilaterally symmetric shape, similarly as shown in FIG. 18E, despite the existence of a delay on the eighth laser light source side (the LD8a is situated at a position shifted to the right side), the halftone dots formed on the sheet P has caused the state in which the delay of the eighth laser light source side cannot be ascertained.

On the other hand, as it can be grasped from FIGS. 18A-18E, in the case that the halftone dots form a bilaterally symmetric shape, when the halftone dots are formed on the sheet P, the halftone dots having a shape depending on the misalignment of the writing start positions are output.

Thus, by forming the halftone dots to a bilaterally symmetric shape, it is found that it becomes easy to sight the misalignment of the writing start positions at the time of performing image formation.

As described above, according to the image forming apparatus 1a of the present embodiment 2, it is of course that the similar effects as those of the image forming apparatus 1 of the embodiment 1, and when the central control section 31 forms the screen pattern image 250 on the sheet P, the streaky moire in the direction inclined for the screen angle α can be excited on the sheet P. Thus, a user can perform the adjustment of the image writing timing by distinguishing between the moiré caused by the misalignment of the writing start positions, and the streaky moiré other than the above moiré, which is parallel to the main scanning direction or the sub scanning direction. Consequently, more easy and accurate adjustment is enabled.

Furthermore, by forming the halftone dots 263 (and halftone dots included in the first screen pattern 161 of the embodiment 1) in a bilaterally symmetric shape, it becomes easy to sight the misalignment of the writing start positions at the time of performing image formation, and user can perform the adjustment of the more accurate writing timing of an image.

Next, a modification of an image forming apparatus of said example will be described. The points different from those of the aforesaid example will be mainly described here.

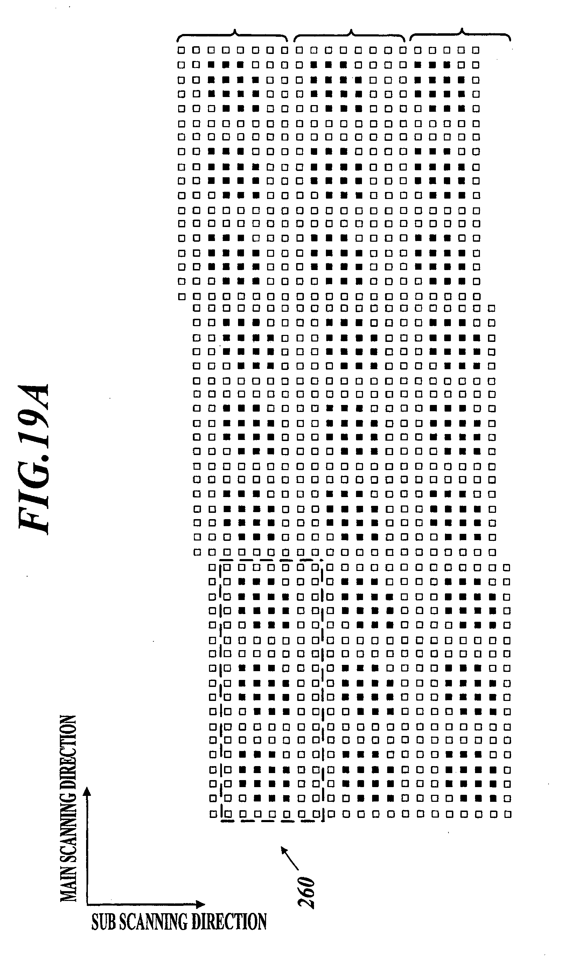

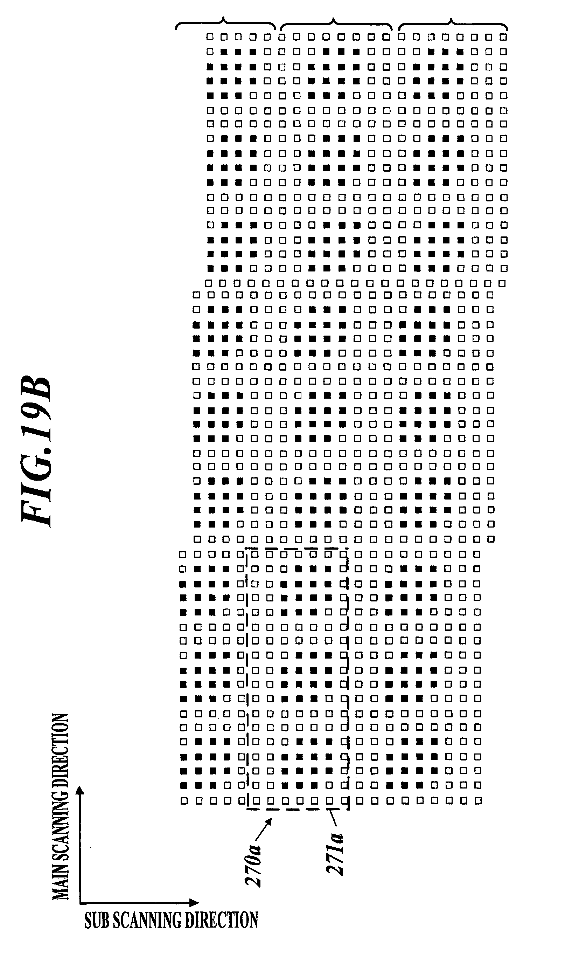

In the image forming apparatus 1a of the aforesaid embodiment 2, the fourth screen pattern image 270 is an image in which the first screen patterns 261 are repeatedly arranged to form an antisymmetric screen angle to the screen angle of the third screen pattern image 260. On the other hand, similar effects can be obtained even when the fourth screen pattern image 270 is replaced with a fourth screen pattern image 270a, in which fourth screen patterns 271a, each of which is the first screen pattern 261 inverted into the vertical direction, are repeatedly arranged in the main scanning direction and the sub scanning direction as shown in FIG. 19 similarly to the second screen pattern 171.

According to a first aspect of the present invention, there is provided an image forming apparatus, including:
a laser light source section configured to include a plurality of laser light sources arranged in a sub scanning direction with predetermined intervals;
an irradiation section configured to irradiate a photosensitive body with laser lights emitted from the plurality of laser light sources by scanning in a main scanning direction and the sub scanning direction;
a timing setting section configured to set timing at which the irradiation section irradiates the photosensitive body with the laser lights emitted from the laser light sources; and
a control section configured to allow forming of on a sheet, by irradiating the photosensitive body with the laser lights based on the timing set in the timing setting section, a combined pattern image in which a plurality of combined images are arranged continuously in the sub scanning direction, in each of which combined images two first line images and a second line image are combined in such a way that the second line image is arranged between the two first line images which are arranged apart from each other in the main scanning direction, each of the first line images being formed by repeatedly performing scanning in the main scanning direction only with laser light emitted from a first laser light source among the laser light sources, and the second line image being formed by repeatedly performing scanning in the main scanning direction only with laser light emitted from a second laser light source among the laser light sources, which second laser light source produces a largest error in the main scanning direction on the photosensitive body between an irradiation position of the first laser light source and an irradiation position of the second laser light source.

That is, an image forming apparatus capable of easily adjusting the image writing timing into the main scanning direction by a multi-beam system even to a high resolution image can be provided.

Preferably, the control section forms a first screen pattern image and a second screen pattern image on the sheet in addition to the combined pattern image, in which first screen pattern image first screen patterns each being composed of a predetermined number of pixels are arranged in the main scanning direction and the sub scanning direction repeatedly and a number of the pixels constituting each of the first screen patterns in the sub scanning direction is determined to be in a relation of being prime with a number of the laser light sources arranged in the laser light source section, and in which second pattern image second screen patterns each produced by vertically inverting each of the first screen patterns are repeatedly arranged in the main scanning direction and the sub scanning direction.

That is, a user observes in which of the first screen pattern image and the second screen pattern image output to be the sheet moire strongly appears, and thereby the user can grasp whether or not the misalignment in the main scanning direction of the writing start positions of laser light sources arranged in the laser light source section exists. Then, because the numbers of pixels in the sub scanning direction of the first screen pattern and the second screen pattern respectively constituting the first screen pattern image and the second screen pattern image are set to a number in the relation of prime with the number of the laser light sources, the period in which moiré arises is extended, and the user easily observes the moiré even to a high resolution image. Furthermore, when the user observes in which of the first screen pattern image and the second screen pattern image the moiré strongly appears, the user again sets the adjustment value with the displaying/setting section, and can easily adjust the image writing timing only by performing the adjustment in order that the moires may be evenly observed in both he first screen pattern image and the second screen pattern image.

Preferably, the control section can form respective images of colors of black, magenta, cyan, and yellow on the sheet.

That is, the trouble of forming the pattern images of the respective colors on different sheets is reduced, and the adjustment of the writing timing of an aforesaid image can be performed to all of the colors simultaneously. Consequently, it becomes possible to perform the adjustment rapidly.

Preferably, the control section specifies one or a plurality of colors from the colors depending on a use of the image forming apparatus and forms the image on the sheet with the specified color.

That is, one or a plurality of colors is specified according to the use of an image forming apparatus, and the pattern images can be formed on a sheet by using the specified color. Consequently, the adjustment of the writing timing of image can pertinently be performed only for the color by which the moiré is conspicuous.

Preferably, the control section forms an image enlarged in the main scanning direction by a predetermined magnification ratio on the sheet.

That is, a user can perform the observation of a gap line and moiré in a pattern image more easily.

An image forming apparatus includes:
a laser light source section to include a plurality of laser light sources arranged in a sub scanning direction with predetermined intervals;
an irradiation section to irradiate a photosensitive body with laser lights emitted from the plurality of laser light sources by scanning in a main scanning direction and the sub scanning direction;
a timing setting section to set timing at which the irradiation section irradiates the photosensitive body with the laser lights emitted from the laser light sources; and
a control section to allow forming of a first screen pattern image and a second screen pattern image on a sheet by irradiating the photosensitive body with the laser lights based on the timing set in the timing setting section, in which first screen pattern image first screen patterns each being composed of a predetermined number of pixels are arranged in the main scanning direction and the sub scanning direction repeatedly and a number of the pixels constituting each of the first screen patterns in the sub scanning direction is determined to be in a relation of being prime with a number of the laser light sources arranged in the laser light source section, and in which second pattern image second screen patterns each produced by vertically inverting each of the first screen patterns are repeatedly arranged in the main scanning direction and the sub scanning direction.

That is, the image forming apparatus enabling a user to easily adjust the writing timing in the main scanning direction with the multi-beam system even with respect to a high resolution image can be provided.

An image forming apparatus can also include:
a laser light source section to include a plurality of laser light sources arranged in a sub scanning direction with predetermined intervals;
an irradiation section to irradiate a photosensitive body with laser lights emitted from the plurality of laser light sources by scanning in a main scanning direction and the sub scanning direction;
a timing setting section to set timing at which the irradiation section irradiates the photosensitive body with the laser lights emitted from the laser light sources; and
a control section to allow forming of a third screen pattern image on a sheet by irradiating the photosensitive body with the laser lights based on the timing set in the timing setting section, in which third screen pattern image first screen patterns each being composed of a predetermined number of pixels are repeatedly arranged in the main screen direction and the sub scanning direction so as to form a predetermined screen angle and a number of pixels constituting each of the first screen patterns in the sub scanning direction is determined to be in a relation of being prime with a number of the light sources arranged in the laser light source section.

That is, the image forming apparatus enabling a user to easily adjust the writing timing in the main scanning direction with the multi-beam system even with respect to a high resolution image can be provided.

Preferably, the control section allows forming of a fourth screen pattern image on the sheet in addition to the third screen pattern image, in which fourth screen pattern image the first screen patterns are repeatedly arranged in the main scanning direction and the sub scanning direction so as to form an antisymmetric screen angle to the screen angle of the third screen pattern image.

Preferably, the control section allows forming of a fourth screen pattern image on the sheet in addition to the third screen pattern image, in which fourth screen pattern image second screen patterns each produced by vertically inverting each of the first screen patterns are repeatedly arranged in the main scanning direction and the sub scanning direction.

That is, the streaky moiré in the direction inclined by a screen angle can be excited on the sheet when the control section forms a screen pattern image on the sheet. That is, a user can perform the adjustment of writing timing of an image by distinguishing the moiré caused by the misalignment of writing start positions, and the streaky moiré other than the aforesaid moiré, which is parallel to the main scanning direction or the sub scanning direction. Consequently, the user can perform accurate adjustment more easily.

Preferably, a shape of halftone dots included in the first screen pattern image has a bilaterally symmetric property.

That is, by forming the halftone dots included in the first screen pattern in a bilaterally symmetric shape, the misalignment of the writing start positions at the time of performing image formation becomes easy to sight, a user can perform more accurate adjustment of writing timing.

According to a second aspect of the present invention, there is provided a method for forming an image on a sheet by using a laser light source section which includes a plurality of laser light sources arranged in a sub scanning direction with predetermined intervals, an irradiation section which irradiates a photosensitive body with laser lights emitted from the plurality of laser light sources by scanning in a main scanning direction and the sub scanning direction, and a timing setting section which sets timing at which the irradiation section irradiates the photosensitive body with the laser lights emitted from the laser light sources, the method including the step of:
forming on a sheet, by irradiating the photosensitive body with the laser lights based on the timing set in the timing setting section, a combined pattern image in which a plurality of combined images are arranged continuously in the sub scanning direction, in each of which combined images two first line images and a second line image are combined in such a way that the second line image is arranged between the two first line images which are arranged apart from each other in the main scanning direction, each of the first line images being formed by repeatedly performing scanning in the main scanning direction with laser light emitted from a first laser light source among the laser light sources, and the second line image being formed by repeatedly performing scanning in the main scanning direction only with laser light emitted from a second laser light source among the laser light sources, which second laser light source produces a largest error in the main scanning direction on the photosensitive body between an irradiation position of the first laser light source and an irradiation position of the second laser light source.

That is, the image forming apparatus enabling a user to easily adjust the writing timing in the main scanning direction with the multi-beam system even with respect to a high resolution image can be provided.

A method for forming an image on a sheet by using a laser light source section which includes a plurality of laser light sources arranged in a sub scanning direction with predetermined intervals, an irradiation section which irradiates a photosensitive body with laser lights emitted from the plurality of laser light sources by scanning in a main scanning direction and the sub scanning direction, and a timing setting section which sets timing at which the irradiation section irradiates the photosensitive body with the laser lights emitted from the laser light sources, the method including the step of:
forming a first screen pattern image and a second screen pattern image on a sheet by irradiating the photosensitive body with the laser lights based on the timing set in the timing setting section, in which first screen pattern image first screen patterns each being composed of a predetermined number of pixels are arranged in the main scanning direction and the sub scanning direction repeatedly and a number of the pixels constituting each of the first screen patterns in the sub scanning direction is determined to be in a relation of being prime with a number of the laser light sources arranged in the laser light source section, and in which second pattern image second screen patterns each produced by vertically inverting each of the first screen patterns are repeatedly arranged in the main scanning direction and the sub scanning direction.

That is, the image forming apparatus enabling a user to easily adjust the writing timing in the main scanning direction with the multi-beam system even with respect to a high resolution image can be provided.

A method for forming an image on a sheet by using a laser light source section which includes a plurality of laser light sources arranged in a sub scanning direction with predetermined intervals, an irradiation section which irradiates a photosensitive body with laser lights emitted from the plurality of laser light sources by scanning in a main scanning direction and the sub scanning direction, and a timing setting section which sets timing at which the irradiation section irradiates the photosensitive body with the laser lights emitted from the laser light sources, the method including the step of:
forming of a third screen pattern image on a sheet by irradiating the photosensitive body with the laser lights based on the timing set in the timing setting section, in which third screen pattern image first screen patterns each being composed of a predetermined number of pixels are repeatedly arranged in the main screen direction and the sub scanning direction so as to form a predetermined screen angle and a number of pixels constituting each of the first screen patterns in the sub scanning direction is determined to be in a relation of being prime with a number of the light sources arranged in the laser light source section.

That is, the image forming apparatus enabling a user to easily adjust the writing timing in the main scanning direction with the multi-beam system even with respect to a high resolution image can be provided.

In addition, the description of the image forming apparatus and the image forming method as claimed is not limited to the embodiments. The detailed configurations and detailed operations of the image forming apparatus can suitably be changed.

For example, although the number of the laser light sources arranged in the laser light source section of each embodiment is made to eight, the number is not limited to eight as a matter of course, and can suitably be changed. In this case, it is only necessary to store the screen pattern image 150 in the storage section 32, in which screen pattern image 150 the number of pixels in the sub scanning direction of each of the first screen pattern 161 and the second screen pattern 171 is in a relation of being prime with the changed number of the laser light sources.

Furthermore, although the examples using hard disk drives (HDD) as computer-readable media storing programs are disclosed in the present embodiment, the present invention is not limited to these examples. As the other computer-readable media, portable recording media such as a compact disc read-only memory (CD-ROM), nonvolatile memories such as a flash memory, and the like, can be applied. Furthermore, as a medium providing the data of programs through communication lines, carrier waves can also be applied.

## Claims

1. An image forming apparatus (1), comprising:
a laser light source section (20) configured to include a plurality of laser light sources arranged in a sub scanning direction with predetermined intervals;
an irradiation section (12) configured to irradiate a photosensitive body (10) with laser lights emitted from the plurality of laser light sources by scanning in a main scanning direction and the sub scanning direction;
a timing setting section (60) configured to set timing at which the irradiation section irradiates the photosensitive body with the laser lights emitted from the laser light sources; and
a control section (30) configured to allow forming on a sheet, by irradiating the photosensitive body (10) with the laser lights based on the timing set in the timing setting section (60), a combined pattern image (100) in which a plurality of combined images are arranged continuously in the sub scanning direction, in each of which combined images two first line images (101) and a second line image (102) are combined in such a way that the second line image is arranged between the two first line images which are arranged apart from each other in the main scanning direction, each of the first line images being formed by repeatedly performing scanning in the main scanning direction only with laser light emitted from a first laser light source (101) among the laser light sources, and the second line image being formed by repeatedly performing scanning in the main scanning direction only with laser light emitted from a second laser light source among the laser light sources, which second laser light source being the laser light source which produces a largest error in the main scanning direction on the photosensitive body between an irradiation position of the first laser light source and an irradiation position of the second laser light source.

2. The image forming apparatus of claim 1, wherein the control section (30) is configured to form a first screen pattern image (160) and a second screen pattern image (170) on the sheet in addition to the combined pattern image (100), in which first screen pattern image first screen patterns each being composed of a predetermined number of pixels are arranged in the main scanning direction and the sub scanning direction repeatedly and a number of the pixels constituting each of the first screen patterns in the sub scanning direction is determined to be in a relation of being prime with a number of the laser light sources arranged in the laser light source section, and in which second pattern image second screen patterns each produced by vertically inverting each of the first screen patterns are repeatedly arranged in the main scanning direction and the sub scanning direction.

3. The image forming apparatus of claim 2, wherein a shape of halftone dots included in the first screen pattern image has a bilaterally symmetric property.

4. The image forming apparatus of claim 1, wherein the control section can form respective images of colors of black, magenta, cyan, and yellow on the sheet.

5. The image forming apparatus of claim4, wherein the control section is configured to specify one or a plurality of colors from the colors depending on a use of the image forming apparatus and forms the image on the sheet with the specified color.

6. The image forming apparatus of claim 1, wherein the control section is configured to form an image enlarged in the main scanning direction by a predetermined magnification ratio on the sheet.

7. A method for forming an image on a sheet by using a laser light source section which includes a plurality of laser light sources (20) arranged in a sub scanning direction with predetermined intervals, an irradiation section (12) which irradiates a photosensitive body (10) with laser lights emitted from the plurality of laser light sources by scanning in a main scanning direction and the sub scanning direction, and a timing setting section (60) which sets timing at which the irradiation section irradiates the photosensitive body with the laser lights emitted from the laser light sources, the method comprising the step of:
forming on a sheet, by irradiating the photosensitive body with the laser lights based on the timing set in the timing setting section, a combined pattern image (100) in which a plurality of combined images are arranged continuously in the sub scanning direction, in each of which combined images two first line images (101) and a second line image (102) are combined in such a way that the second line image is arranged between the two first line images which are arranged apart from each other in the main scanning direction, each of the first line images being formed by repeatedly performing scanning in the main scanning direction only with laser light emitted from a first laser light source among the laser light sources, and the second line image being formed by repeatedly performing scanning in the main scanning direction only with laser light emitted from a second laser light source among the laser light sources, which second laser light source being the laser light source which produces a largest error in the main scanning direction on the photosensitive body between an irradiation position of the first laser light source and an irradiation position of the second laser light source.

## Patentansprüche

1. Bildbildungsvorrichtung (1), die Folgendes umfasst:
einen Laserlichtquellenabschnitt (20), der dazu konfiguriert ist, mehrere Laserlichtquellen zu umfassen, die mit vorherbestimmten Abständen in einer Nebenrasterrichtung angeordnet sind;
einen Bestrahlungsabschnitt (12), der dazu konfiguriert ist, einen lichtempfindlichen Körper (10) mit von den mehreren Laserlichtquellen ausgestrahlten Laserlichtern durch Abtasten in einer Hauptrasterrichtung und der Nebenrasterrichtung zu bestrahlen;
einen Zeiteinstellungsabschnitt (60), der dazu konfiguriert ist, die Zeit einzustellen, zu der der Bestrahlungsabschnitt den lichtempfindlichen Körper mit den von den Laserlichtquellen ausgestrahlten Laserlichtern bestrahlt; und
einen Steuerungsabschnitt (30), der dazu konfiguriert ist, durch Bestrahlen des lichtempfindlichen Körpers (10) mit den Laserlichtern basierend auf der in dem Zeiteinstellungsabschnitt (60) eingestellten Zeit, auf einem Blatt das Bilden eines kombinierten Musterbilds (100) zuzulassen, in dem mehrere kombinierte Bilder kontinuierlich in der Nebenrasterrichtung angeordnet sind, wobei in jedem der kombinierten Bilder zwei erste Zeilenbilder (101) und ein zweites Zeilenbild (102) auf derartige Weise kombiniert werden, dass das zweite Zeilenbild zwischen den zwei ersten Zeilenbildern angeordnet ist, die getrennt voneinander in der Hauptrasterrichtung angeordnet sind, wobei jedes der ersten Zeilenbilder durch wiederholtes Ausführen von Abtasten in der Hauptrasterrichtung nur mit von einer ersten Laserlichtquelle (101) unter den Laserlichtquellen ausgestrahltem Laserlicht gebildet wird, und das zweite Zeilenbild durch wiederholtes Ausführen von Abtasten in der Hauptrasterrichtung nur mit von einer zweiten Laserlichtquelle unter den Laserlichtquellen ausgestrahltem Laserlicht gebildet wird, wobei es sich bei der zweiten Laserlichtquelle um die Laserlichtquelle handelt, die auf dem lichtempfindlichen Körper einen größten Fehler in der Hauptrasterrichtung zwischen einer Bestrahlungsposition der ersten Laserlichtquelle und einer Bestrahlungsposition der zweiten Laserlichtquelle erzeugt.

2. Bildbildungsvorrichtung nach Anspruch 1, wobei der Steuerungsabschnitt (30) dazu konfiguriert ist, zusätzlich zu dem kombinierten Musterbild (100) ein erstes Bildschirmmusterbild (160) und ein zweites Bildschirmmusterbild (170) auf dem Blatt zu bilden, wobei in dem ersten Bildschirmmusterbild erste Bildschirmmuster, die jeweils aus einer vorherbestimmten Zahl von Pixeln zusammengesetzt sind, in der Hauptrasterrichtung und in der Nebenrasterrichtung wiederholt angeordnet sind und eine Anzahl der jedes der ersten Bildschirmmuster in der Nebenrasterrichtung ausmachenden Pixel dazu bestimmt wird, in einem primzahligen Verhältnis zu einer Anzahl der in dem Laserlichtquellenabschnitt angeordneten Laserlichtquellen zu stehen, und wobei in dem zweiten Musterbild zweite Bildschirmmuster, die jeweils durch vertikales Invertieren jedes der ersten Bildschirmmuster erzeugt werden, wiederholt in der Hauptrasterrichtung und der Nebenrasterrichtung angeordnet werden.

3. Bildbildungsvorrichtung nach Anspruch 2, wobei eine Form von in dem ersten Bildschirmmusterbild enthaltenen Halbtonpunkten eine bilateral symmetrische Eigenschaft aufweist.

4. Bildbildungsvorrichtung nach Anspruch 1, wobei der Steuerungsabschnitt jeweilige Bilder aus den Farben Schwarz, Magenta, Cyan und Gelb auf dem Blatt bilden kann.

5. Bildbildungsvorrichtung nach Anspruch 4, wobei der Steuerungsabschnitt dazu konfiguriert ist, eine oder mehrere Farben aus den Farben abhängig von einer Verwendung der Bildbildungsvorrichtung vorzugeben und das Bild mit der vorgegebenen Farbe auf dem Blatt bildet.

6. Bildbildungsvorrichtung nach Anspruch 1, wobei der Steuerungsabschnitt dazu konfiguriert ist, ein in der Hauptrasterrichtung um ein vorherbestimmtes Vergrößerungsverhältnis vergrößertes Bild auf dem Blatt zu bilden.

7. Verfahren zum Bilden eines Bilds auf einem Blatt durch Verwenden eines Laserlichtquellenabschnitts, der mehrere mit vorherbestimmten Abständen in einer Nebenrasterrichtung angeordnete Laserlichtquellen (20) umfasst, eines Bestrahlungsabschnitts (12), der einen lichtempfindlichen Körper (10) durch Abtasten in einer Hauptrasterrichtung und der Nebenrasterrichtung mit von den mehreren Laserlichtquellen ausgestrahlten Laserlichtern bestrahlt, und eines Zeiteinstellungsabschnitts (60), der die Zeit einstellt, zu der der Bestrahlungsabschnitt den lichtempfindlichen Körper mit den von den Laserlichtquellen ausgestrahlten Laserlichtern bestrahlt, wobei das Verfahren folgenden Schritt umfasst:
Bilden, durch Bestrahlen des lichtempfindlichen Körpers mit den Laserlichtern basierend auf der in dem Zeiteinstellungsabschnitt eingestellten Zeit, eines kombinierten Musterbilds (100) auf einem Blatt, in dem mehrere kombinierte Bilder kontinuierlich in der Nebenrasterrichtung angeordnet sind, wobei in jedem der kombinierten Bilder zwei erste Zeilenbilder (101) und ein zweites Zeilenbild (102) auf derartige Weise kombiniert werden, dass das zweite Zeilenbild zwischen den zwei ersten Zeilenbildern angeordnet ist, die getrennt voneinander in der Hauptrasterrichtung angeordnet sind, wobei jedes der ersten Zeilenbilder durch wiederholtes Ausführen von Abtasten in der Hauptrasterrichtung nur mit von einer ersten Laserlichtquelle unter den Laserlichtquellen ausgestrahltem Laserlicht gebildet wird, und das zweite Zeilenbild durch wiederholtes Ausführen von Abtasten in der Hauptrasterrichtung nur mit von einer zweiten Laserlichtquelle unter den Laserlichtquellen ausgestrahltem Laserlicht gebildet wird, wobei es sich bei der zweiten Laserlichtquelle um die Laserlichtquelle handelt, die auf dem lichtempfindlichen Körper einen größten Fehler in der Hauptrasterrichtung zwischen einer Bestrahlungsposition der ersten Laserlichtquelle und einer Bestrahlungsposition der zweiten Laserlichtquelle erzeugt.

## Revendications

1. Appareil de formation d'images (1), comprenant :
une section à sources de lumière laser (20) configurée pour inclure une pluralité de sources de lumière laser agencées suivant un sens de sous-scannage avec des intervalles prédéterminés ;
une section d'irradiation (12) configurée pour irradier un corps photosensible (10) à l'aide de lumières laser émises à partir de la pluralité de sources de lumière laser grâce à un scannage suivant un sens de scannage principal et le sens de sous-scannage ;
une section à réglage de minuterie (60) configurée pour régler le moment auquel la section d'irradiation va irradier le corps photosensible à l'aide des lumières laser émises à partir des sources de lumière laser ; et
une section de commande (30) configurée de façon à assurer la formation sur une feuille, grâce à l'irradiation du corps photosensible (10) à l'aide des lumières laser sur la base de la minuterie réglée dans la section à réglage de minuterie (60), d'une image de motifs combinés (100) dans laquelle une pluralité d'images combinées est agencée en continu suivant le sens de sous-scannage, alors que dans chacune des images combinées deux premières images à lignes (101) et une deuxième image à lignes (102) sont combinées de manière à ce que la deuxième image à lignes soit agencée entre les deux premières images à lignes qui sont agencées suivant un certain espacement l'une par rapport à l'autre suivant le sens de scannage principal, chacune des premières images à lignes étant formée grâce à la réalisation répétée d'un scannage suivant le sens de scannage principal, alors que de la lumière laser est seulement émise à partir d'une première source de lumière laser (101) parmi les sources de lumière laser, et la deuxième image à lignes étant formée grâce à la réalisation répétée d'un scannage suivant le sens de scannage principal, alors que de la lumière laser est seulement émise à partir d'une deuxième source de lumière laser parmi les sources de lumière laser, cette deuxième source de lumière laser étant la source de lumière laser qui produit l'erreur la plus grande suivant le sens de scannage principal sur le corps photosensible entre une position d'irradiation de la première source de lumière laser et une position d'irradiation de la deuxième source de lumière laser.

2. Appareil de formation d'images selon la revendication 1, la section de commande (30) étant configurée de façon à former, sur la feuille, une image à premiers motifs de trame (160) et une image à deuxièmes motifs de trame (170), en plus de l'image de motifs combinés (100), alors que, dans cette image à premiers motifs de trame, les premiers motifs de trame, dont chacun est composé d'un nombre prédéterminé de pixels, sont agencés suivant le sens de scannage principal et le sens de sous-scannage de façon répétée, et qu'un nombre des pixels constituant chacun des premiers motifs de trame suivant le sens de sous-scannage est déterminé comme ayant été mis en relation pour être premier avec un nombre des sources de lumière laser agencées dans la section de sources de lumière laser, et dans cette image à deuxièmes motifs, les deuxièmes motifs de trame, dont chacun est produit en vertu de l'inversion verticale de chacun des premiers motifs de trame, sont agencés de façon répétée suivant le sens de scannage principal et le sens de sous-scannage.

3. Appareil de formation d'images selon la revendication 2, une forme de points en demi-teinte incluse dans l'image à premiers motifs de trame possédant une propriété symétrique dans le plan bilatéral.

4. Appareil de formation d'images selon la revendication 1, la section de commande pouvant former des images de couleur respectives, à savoir noir, magenta, cyan et jaune, sur la feuille.

5. Appareil de formation d'images selon la revendication 4, la section de commande étant configurée de façon à spécifier une couleur ou une pluralité de couleurs, parmi les couleurs, en fonction d'une utilisation de l'appareil de formation d'images, et formant l'image sur la feuille avec la couleur spécifiée.

6. Appareil de formation d'images selon la revendication 1, la section de commande étant configurée de façon à former, sur la feuille, une image élargie suivant le sens de scannage principal en vertu d'un rapport d'agrandissement prédéterminé.

7. Procédé destiné à former une image sur une feuille en utilisant une section à sources de lumière laser laquelle englobe une pluralité de sources de lumière laser (20) agencées suivant un sens de sous-scannage avec des intervalles prédéterminés, une section d'irradiation (12) laquelle irradie un corps photosensible (10) à l'aide de lumières laser émises à partir de la pluralité de sources de lumière laser grâce à un scannage suivant un sens de scannage principal et le sens de sous-scannage, et une section à réglage de minuterie (60) laquelle règle le moment auquel la section d'irradiation va irradier le corps photosensible à l'aide des lumières laser émises à partir des sources de lumière laser, le procédé comprenant l'étape consistant à :
former sur une feuille, grâce à l'irradiation du corps photosensible à l'aide des lumières laser sur la base de la minuterie réglée dans la section à réglage de minuterie, une image de motifs combinés (100) dans laquelle une pluralité d'images combinées est agencée en continu suivant le sens de sous-scannage, alors que dans chacune des images combinées deux premières images à lignes (101) et une deuxième image à lignes (102) sont combinées de manière à ce que la deuxième image à lignes soit agencée entre les deux premières images à lignes qui sont agencées suivant un certain espacement l'une par rapport à l'autre suivant le sens de scannage principal, chacune des premières images à lignes étant formée grâce à la réalisation répétée d'un scannage suivant le sens de scannage principal, alors que de la lumière laser est seulement émise à partir d'une première source de lumière laser parmi les sources de lumière laser, et la deuxième image à lignes étant formée grâce à la réalisation répétée d'un scannage suivant le sens de scannage principal, alors que de la lumière laser est seulement émise à partir d'une deuxième source de lumière laser parmi les sources de lumière laser, cette deuxième source de lumière laser étant la source de lumière laser qui produit l'erreur la plus grande suivant le sens de scannage principal sur le corps photosensible entre une position d'irradiation de la première source de lumière laser et une position d'irradiation de la deuxième source de lumière laser.
